# EUROPEAN PATENT SPECIFICATION

(11) **EP 1 991 741 B1**
(45) Date of publication and mention of the grant of the patent: **06.06.2012**
(21) Application number: 07705269.4
(22) Date of filing: 23.02.2007
(51) Int. Cl.: B63B 35/44, F03B 13/26, E02B 9/08

(54) **Power generator for electrical power from wave motion**
Vorrichtung zum Erzeugen vom Strom aus Wellengang
Appareil utilisant l'énergie des vagues

(30) Priority: 25.02.2006 GB 0603798
(43) Date of publication of application: 19.11.2008
(73) Proprietor: Fulton, John Mcgee, Dundee DD5 3QZ (GB)
(72) Inventor: Fulton, John Mcgee, Dundee DD5 3QZ (GB)
(74) Representative: Moreland, David
(86) International application number: PCT/GB2007/000638
(87) International publication number: WO 2007/096638

(56) References cited:
- WO-A-2005/108778
- CA-A1- 2 342 378
- DE-A1- 3 108 034
- US-A- 1 542 252

## Description

### FIELD OF INVENTION

The present invention relates to a structure which is at least partly buoyant, floating or floatable and which may find use in water purification/desalination and power generation.

### BACKGROUND TO INVENTION

The national and global predicament within which the present invention has been conceived is multidimensional. At one extreme lies the competing demand for land resulting from the increase in world population and global urbanisation; and at the other the decline in the supply of finite fossil fuels for energy generation and the need for supply of safe water.

The UN (UNESCO) forecasts that by the middle of this century, between two billion and seven billion people will face water shortages, and that no region will be spared the impact of this crisis. Water supplies are falling, while demand is dramatically growing.

The scale of the problem and of the market is immense. The UN published statistics and predictions in its "State of the World's Cities Report 2001" suggest that the world's city populations would increase from 2,785,590,000 to 4, 176, 000, 000 by the year 2020, and further rise to 6,076,000,000 by the year 2030; an increase of 117%. Most of this development is likely to take place within and around existing cities worldwide. The USA had a population in the year 2000 of 281, 421, 906 persons, a build space existing in the year 2000 of 27, 870, 000m², and a built space assessed to be required by the year 2030 of 39, 669, 000, 000m². Around 27.3% of this development will be undertaken by replacing existing structures, while around 45% will be new build to accommodate the increase in population.

To accommodate the anticipated increase in the world's urban population to the same space standards in the USA in the year 2000 by the year 2030, an increase in built space of around 11.7 times all the buildings and infrastructure that existed in the USA in year 2000 will be required, i.e. 11.7 x 27, 870, 000, 000m² = 326, 079, 000, 000m².

It is widely accepted that we are nearing the end of the age of oil and fossil fuels, and that the world is facing a grave energy crisis.

The world has become preoccupied with global warming, climate change and the reduction in the emission of CO₂. However, as a result we fail to understand the magnitude of the real global problem - the rate of depletion of the world's proved recoverable reserves of fossil fuels, the burning of which provides most of the world's energy and CO₂. CO₂ is the effect not the cause.

By calculation, the world's energy statistics at 2004 published by Nationmasster.com indicate the following depletion dates for oil, natural gas and coal. The following depletion dates are based on neither the 2004 consumption rates nor recovery rates increasing:

| | |
|---|---|
| Oil | 46 years 2050 |
| Natural Gas | 68 years 2072 |
| Coal | 114 years 2118 |

Applying the increase in energy demand by the world's growing urban populations as forecast by the UN (doubling over the next 40 years and beyond), and if recovery rates of oil and natural gas could increase to meet the increased demand, the depletion dates would be as follows:

| | |
|---|---|
| Oil | 31 years 2035 |
| Natural Gas | 36 years 2040 |
| Coal | 62 years 2066 |

It should be noted that both oil and natural gas recovery has been assessed by many to have either reached their peak or close to.

If natural gas and coal was used to fulfil the shortfall in oil, and coal thereafter fulfils the shortfall in gas, the depletion date of all proved recoverable reserves would be 2050.

Alternatives to replace hydrocarbon energy include nuclear and renewable energy sources.

Regarding nuclear (fission) reactor power stations, at 2005 there were 409 nuclear power stations in the world. To replace all fossil fuel energy production by 2050 (45 years) would require 6,942 similar sized nuclear power stations. At 144 per year would require 2.77 per week worldwide if there was enough Uranium.

Concerning nuclear (fusion) reactor power stations, there is no knowledge as to if or when such technology will be available.

Renewable energy sources comprise: bio-fuel, solar, wind, wave (wind), and tidal.

Regarding burning bio-fuel, on the grounds that the world's existing volume of bio-fuel plants and trees is failing to reduce the present level of CO₂, it is strange that burning bio-fuel is considered green and sustainable by planting an equivalent volume to compensate that used. Surely it would be more appropriate not to burn trees and food, but plant more and at the same time increase the volume and variety of bio diversity and offset the huge volume of CO₂ emissions due to be released by the certainty of an increased burning of coal.

Solar energy is reliant on sunlight, which is unpredictable. Also, wind and wave devices rely on non-predictable and intermittent activity. However, tidal devices rely on predictable activity.

Regarding wind and wave power generation farms, wind and wave supply generally functions in hostile environments and on average supply 30% or less of their rated power capacity. Being intermittent in their supply to the national grid they require existing power stations to remain in production; some intermittently on standby. Tidal flow power is similar but predictable.

Invariably, renewable energy systems like wind farms claim two achievements - CO₂ saving and the supply of the electricity requirement of many houses.

For example, British Wind Energy Association (BWEA), each kWh supplied by wind saves the CO₂ emission of a kWh produced in a fossil fuel power station. However the power station still runs on standby and emits CO₂ and the wind farm supply loses a further 8% within the national grid.

Concerning Homes Equivalent (BWEA), this is a measure of how many households a wind farm will supply with electricity (BWEA). However electricity within the home is only part of a family's house energy needs.

For example, the UK now has two Gigawatts of installed intermittent wind power:
2,000,000,000 Watts supply
2,000,000 kWh x 0.3 x 8760 = 5,256,000,000 kWh per year.
Deduct 8% loss in Grid - 420,480,000 kWh = 4,835,520,000 kWh per year
No of homes equivalent divide by 4700 = 1,088,834 households .

However, average power and heating required per household typically = 23,800 kWh per year. Therefore the number of households fully supplied by wind power in UK = 203,173 homes.

Regarding sustainability, the average wind farm in the UK will pay back the energy used in its manufacture within three to five months, and over its lifetime a wind turbine will produce over 30 times more energy than was used in its manufacture (according to BWEA). The lifetime thereof varies from 7.5 years to 12.5 years.

Families require more: water, sewage treatment, transportation, heated, cooled and lit schools, hospitals etc. For example, for new housing in the Thames "Gateway", for 91,000 new homes the following buildings with heat and power were required to accommodate the range of facilities required by the families that would live in these new homes:
19 primary care centres
1,000 acute hospital beds
55 primary schools
10 secondary schools
6 playing fields
63 nurseries
6 police stations
3 fire stations
10 libraries
9 leisure centres

"Toward a New Metropolis : The opportunity to Rebuild America" by The Brookings Institute, concludes that by 2030 about half the buildings Americans will live, work and shop will have been built after 2000. Growth related and replacement development will be more than one third of all development existing in 2000.

At 2000 the ratio of housing floor area to commercial/institutional and industrial space was as follows:
Residential average 2.4 persons per dwelling at 58.34m² per person

| | |
|---|---|
| Commercial/institutional | 35.20m² per person |
| Industrial | 4.01m² per person. |

The BWEA homes equivalent measure is meaningless in terms of the above examples. It relates to the form of existing urban structure where generally each activity in which people are involved is enclosed by a stand-alone building and supplied electricity by power generating plants great distances beyond. Similarly for water supplies and sewage treatment plants. Above all it relates to a city form designed or adapted to facilitate the energy wasteful automobile as the preferred means of transport within and without.

The projected end of fossil fuel illustrated is based on the global expansion of cities to the same design and inefficient form that has brought us thus far. The opportunity exists for a new way (3D City) to accommodate the global expansion of the urban population in a manner that is sustainable. This invention relates to a "high density 3D garden city" form that could achieve this if the massive building effort now racing ahead throughout the world was focused on avoiding inevitable total breakdown.

Tidal devices generally rely on tidal flow or tidal rise and fall. Tidal flow devices harness the power of tidal flow in a manner similar to wind generators and generate energy via rotation. These devices are located below water level and transmit to shore the electrical energy generated. Tidal rise and fall devices harness the power in the rise and fall of the tide within lagoons created behind man-made barrages. The energy of the incoming tide is harnessed by turbines in apertures located near seabed level, and the same turbines harness the energy in the out flowing tide in a manner similar to a shore based hydro-electric generating plant, and transmit the electrical energy generated. Barrages can range in scale from small coffer dams to those that enclose whole estuaries.

Documents WO2005/108778-A- and CA2342378-A- disclose devices for production of electric energy from a wave motion of water. It is an object of the present invention to obviate or at least mitigate one or more problems and/or disadvantages of the prior art.

It is still an object of the present invention to provide a new tidal powered energy generating device which harnesses power in the rise and fall of the tide (the tidal range), and which can function in sheltered coastal locations.

The force inherent in a rising level of fluid, e.g. tide, is equal to the total weight of the load being lifted, and the force inherent in a falling level of fluids, e.g. tide, is equal to the total load being lowered. These forces are known and are equal to the weight of water displaced by a floating load. It is these which are the forces that a fluid/tidal pump according to the invention is designed to harness.

It is still an object of at least one embodiment of at least one aspect of the present invention to seek to provide a self-sustaining, ecologically friendly living/working environment.

It is still an object of the invention to obviate or mitigate the need for an electricity distribution system or "grid", and to provide three dimensional high density garden city design which addresses global problems of vast urbanisation, decline in the supply of fossil fuels, scarcity of development land and need for safe water.

Regarding concept development, it is still an object of the present invention to provide one or more of:
Hillside terraced garden housing;
Car free use;
High density land based renewal of cities;
Expansion of coastal cities seaward;
Avoidance of Seaborne Archipelago which address rising sea levels and earthquakes.

Regarding basic module (village), it is still an object of the present invention to provide one or more of:
Terraced landscaped valley form,
Adaptable 3D geometry universally applicable;
Strata (floors) providing a range of environmental qualities;
Residential, educational, health, institutional and commercial activities located upon these floors;
Range of human activities relate to each other horizontally, vertically and diagonally (3D);
Total "footprint" terraced landscape with pools, streams, waterfalls and pathways;
Private landscape to residential and education with pedestrian access;
Common landscape to residents on valley floor; Residential accommodation from penthouses to studios.

It is still an object of the present invention to provide one or more of:
Exploitation of float/post and massive floating load to harness energy of fluid level/tidal rise and fall. Tidal Pump.
Making of each module self sufficient in electrical energy and safe water supply.
Making of each module an exporter of electrical energy and/or safe water to existing cities. Global application.

The Inventor considers the present invention akin to "floating a light bulb in the sea and seeing it light up".

It is still an object of at least one embodiment of at least one aspect of the presnrt invention to provide an at least partially energy/water self-sustaining building platform or site having at least one commercial value building or building site thereon/therein.

### SUMMARY OF INVENTION

Accordingly the present invention provides an electrical power generation apparatus, the apparatus comprising at least one buoyant member and at least one pump means, wherein, un use, the at least one pump means is driven by rise and/or fall of the buoyant member with rise and/or fall of a level of a fluid.

The apparatus may comprise at least one real property, or real estate, or (building) development site, or building, e.g. comprising domestic space(s), and/or educational/institutional space(s), and/or commercial/industrial space and/or open space(s).

The apparatus may comprise enclosed space(s) or buildings, e.g. selected from one or more of domestic space(s), and/or education/institutional space(s), and/or commercial/industrial space(s). The apparatus may also or alternatively comprise open space(s), e.g. selected from gardens and/or public spaces and/or paths, walkways, roads and the like.

The space (s) /site(s)/real estate (s) /building (s) may be provided in or above the buoyant member. Where there are provided a plurality of real estate (s). Such may be spaced from one another horizontally and/or vertically.

The apparatus may provide electrical generation means and water purification/desalination means, which are, in use, driven by the at least one pump means.

The apparatus may be provided in a marine environment such as adjacent land or offshore.

The apparatus may be provided in a river, such as in a weir.

The apparatus may be provided in a basin, such as a basin adjacent to, and communicable with, a body of water, such as a tidal estuary, river, sea, or ocean.

The buoyant member may be made from concrete, e.g. preferably pre-stressed concrete or reinforced concrete. Concrete is a preferred material being fatigue resistant, quickly constructed, durable, strong, economic, watertight, fire resistant and low/no maintenance. It is believed that concrete may easily have a lifespan of 25 to 70 years, and up to 150 to 160 years.

The apparatus may comprise a structure of which the buoyant member comprises part, the structure also comprising at least one part fixed to ground/seabed/river bed below the buoyant member.

The each/part may extend through a respective aperture in the buoyant member.

The apparatus may comprise electrical power generation means and water purification/desalination means operably connected to the at least one pump means.

Other renewable sources of energy may be provided on the apparatus, e.g. on the buildings/real estate, e.g. solar energy sources such as solar panels.

According to the present invention there is provided a buoyant or floating/floatable structure or building structure, comprising a buoyant member and at least one pump means, wherein, in use, the at least one pump means is driven by rise and/or fall of the buoyant member with rise and/or fall of a level of a fluid, e.g. rise and/or fall of the tide.

The rise and/or fall of the tide may comprise at least part or substantially a whole of the tidal range.

The buoyant member may comprise at least one chamber. There may be provided means for varying the buoyancy of the buoyant member, which may include or comprise means for flooding and/or draining the or each at least one chamber.

The buoyant member may comprise a plurality of chambers, which may be provided in an array or honeycomb-like arrangement.

The buoyant member may be made at least partly from a material used for building structures, e.g. concrete, such as pre-stressed concrete or reinforced concrete or precast reinforced concrete.

The buoyant member may weigh between 1,500,000kg and 60,000,000 kg, e.g. typically between around 1,760,205kg and 52,806,150kg, e.g. around 1,760,205kg or 52, 806, 150kg. The buoyant member may have an internal volume of between 2,500m³ and 100,000m³, e.g. between around 2,956m³ and 88, 690m³, e.g. around 2,956m³ or 88,690m³. The buoyant member may have a length of between 20m and 150m, e.g. between around 27m and 135m, e.g. 27m or 135m, a breadth of between 20m and 100m, e.g. between around 27m and 81m, e.g. 27m or 81m, and a height of between 1m and 20m, e.g. between around 5m and 10m, e.g. 5m or 10m.

The buoyant member may comprise a rectilinear body. The rectilinear body may comprise a rectilinear array of rows, columns, and/or levels/floors made up from individual walled chambers. For example, in one implementation there may be provided three chambers in a row, five chambers in a column, and two levels of chambers, e.g. thirty chambers in total. Each chamber may have a height of 5m, a length of 27m, and a breadth of 27m.

The/each chamber may have a volume of between 125ft³ and 500ft³, e.g. typically around 250ft³. Therefore, with two tide per day, a single piston and chamber can pump twice that volume of water.

It will be appreciated by skilled persons that these dimensions are given as exemplification only, actual selected sizes varying dependent upon, e.g. the location, predicted tidal range, and desired pumping performance.

The pump means may comprise at least one piston and piston chamber or cylinder, which piston chamber fills and empties or empties and fills with a fluid upon the rise and/or fall of the tide.

Preferably the fluid is pressurised. There may therefore be provided fluid pressurising means.

Preferably the fluid comprises seawater or river water.

Preferably rise and fall of the tide causes the at least one piston and piston chamber to move with respect to one another.

Preferably one of the piston and piston chamber is fixed on or relative to the buoyant member and the other of the piston and piston chamber is fixed, e.g. relative to a fixed position, such as the seabed or the land, or to the bottom of a body of water, e.g. sea bed, river estuary or the like.

The other of the piston and piston chamber may be fixed to the seabed by means of at least one post or the like.

The buoyant member according to the invention comprises at least one aperture through which at least one, and preferably one of an/the at least one posts extends.

The/each piston may comprise a piston member slidable in sealing engagement with the/each respective cylinder.

The piston may comprise a piston rod. One end of the piston rod may be attached to the piston member by a universal joint or knuckle. Another end of the piston rod may be attached to either the buoyant member or to a gantry on the post, by another universal joint or knuckle. Provision of such allows for lateral play between the buoyant member and post.

The cylinder(s) may be movably and fixably mounted on the post, e.g. by means of a slidable lockable cradle or bushing or the like.

The posts may be piled into the sea bed/river bed, and may be made from reinforced concrete, precast reinforced concrete, and/or steel.

According to the invention, at least one guide means is provided between the/each post and a circumferential portion of the respective aperture. Each/the guide means comprises a rolling damper, e.g. comprising a roller member (e.g. rubber, and/or pneumatic tyre), and a shock absorbing member.

Preferably there are provided a plurality of pump means, and most preferably at least three pump means, symmetrically disposed in relation to one another.

Advantageously each pump means comprises or is provided with an associated post. The posts are beneficially symmetrically disposed. This provides for structural integrity of the structure or device.

Preferably there is provided means for delivering fluid/seawater to the cylinder, such as an inlet fluid line.

Preferably there is provided means for exhausting fluid/seawater from the cylinder, such as an outlet fluid line.

Preferably there are provided valve means for opening the inlet line and closing the outlet line during fluid delivery, and for closing the inlet line and opening the outlet line during fluid exhaust.

Advantageously the/each pump means comprises at least one pair of pistons and piston chambers arranged such that, in use, the pair operate out of synchronisation with one another. In other words, as a first piston chamber or cylinder fills a second piston chamber or cylinder of the second pair empties, and vice versa.

Preferably the fluid is obtained from a body of fluid in which the buoyant member is located.

In an alternative implementation there is provided a hydraulic line between piston chambers of a pair. In such arrangement, in use, a further fluid is sealed within the pair of piston chambers and the line, and is transferred back and forth between the chambers as the fluid level rises and falls.

The further fluid may be an oil.

A generator means, e.g. electrical generator means may be driven by transfer of the further fluid through the line.

In one embodiment one or more of the piston(s) is/are fixed relative to the buoyant member, and one or more of the piston chamber(s) is/are fixed relative to the fixed position, e.g. seabed.

In an alternative embodiment one or more of the piston chamber(s) is/are fixed relative to the buoyant member, and one or more of the piston(s) is/are fixed to the fixed position, e.g. seabed.

### BRIEF DESCRIPTION OF DRAWINGS

Embodiments of the present invention will now be described by way of example only, and with reference to the accompanying drawings, which are:
- **Figure 1**: a schematic view of an RO desalination apparatus according to the prior art;
- **Figures 2 (a) and 2(b)**: schematic views of a structure not in accordance with the present invention;
- **Figure 3**: a schematic view of a structure not in accordance with the present invention;
- **Figure 4 (a)**: a side view of a structure according to the present invention at mid-tide;
- **Figure 4(b)**: a side view of the structure of Figure 4(a) at mid-tide including associated hydraulic circuiting;
- **Figure 4(c)**: a side view of the structure of Figure 4(a) at high water (HW);
- **Figure 4(d)**: a side view of the structure of Figure 4(a) at high water (HW) including associated hydraulic circuitry;
- **Figure 4(e)**: a side view of the water structure of Figure 4(a) at low water;
- **Figure 4(f)**: a side view of the structure of Figure 4(a) at low water (LW) including associated hydraulic circuitry;
- **Figure 4(g)**: a top view of part of the structure of Figure 4(a);
- **Figure 4(h)**: a perspective view of the part of the structure of Figure 4(g);
- **Figure 5(a)**: a cutaway perspective view of a first buoyant member for use in the floating structure of Figure 4(a);
- **Figure 5(b)**: a cutaway perspective view of a second buoyant member for use in the structure of Figure 4(a);
- **Figure 5(c)**: a side view of a portion of the buoyant members of Figures 5(a) or 5(b);
- **Figure 5(d)**: a perspective view of an improvement to the structure of Figure 5(a);
- **Figure 6(a)**: a side view of a structure comprising a single hydraulic drive unit according to the present invention at low water (LW);
- **Figure 6(b)**: a side view of a modified version of the floating structure of Figure 6(a) comprising a plurality of hydraulic drive units at low water (LW) ;
- **Figure 6(c)**: a top view of the modified floating structure of Figure 6 (b) ;
- **Figure 6(d)**: a top view of the structure of Figure 6(b) provided with landscaping and forming a dwelling module;
- **Figure 7(a)**: a top view of a floating structure according to the invention ;
- **Figure 7(b)**: a top view of the floating structure .of Figure 7(a) provided with landscaping and forming a dwelling module;
- **Figure 7(c)**: a top view of a plurality of the dwelling modules of the structure Figure 7(b) arranged to form a landscape;
- **Figure 7(d)**: a side view of the dwelling module(s) of Figure 7(b);
- **Figure 8**: a side view of a structure according to the present invention at mid-tide;
- **Figure 9(a)**: a side view of a structure according to the present invention at high water (HW) including associated hydraulic circuitry;
- **Figure 9(b)**: a simplified side view of part of a hydraulic circuitry of a modification to the structure of Figure 9(a);
- **Figure 9(c)**: a side view of the structure of Figure 9(a) at mid-tide including associated hydraulic circuitry;
- **Figure 9(d)**: a side view of the structure of Figure 9 (a) at low water (LW) including associated hydraulic circuitry;
- **Figure 10**: a schematic view of a water purification apparatus of the prior art;
- **Figure 11**: a schematic view of a water purification and/or generator apparatus not in accordance with the present invention;
- **Figure 12**: a side view of a structure not in accordance with the present invention;
- **Figures 13(a) and 13(e)**: top views of symmetrical arrangements of posts suitable for use in embodiments of the present invention;
- **Figure 14(a)**: a perspective view of a structure according to the present invention;
- **Figure 14(b)**: a perspective view of the structure of Figure 14(a) according to a first modification;
- **Figure 14(c)**: a perspective view of the structure of Figure 14(a) according to a second modification;
- **Figure 15(a)**: a side view of a structure according to a tenth embodiment of the present invention;
- **Figure 15(b)**: a side view of the floating structure of Figure 15 (a) according to a first modification;
- **Figure 15(c)**: a side view of the modified floating structure of Figure 15(b) ;
- **Figure 15(d)**: a side view of the modified structure of Figure 15(b) according to a second modification;
- **Figure 16 (a)**: a side view of a floating structure according to the present invention at high water (HW);
- **Figure 16(b)**: a side view of the structure of Figure 16(a) at mid-tide;
- **Figure 16(c)**: a side view of a structure of Figure 16(b) at low water (LW);
- **Figure 17(a)**: a side view of the modified structure according to the present invention at high water (HW);
- **Figure 17(b)**: a side view of the structure of Figure 17(a) at mid-tide;
- **Figure 17(c)**: a side view of the structure of Figure 17(a) at low water (LW);
- **Figure 18(a)**: a side view of a structure according to the present invention;
- **Figure 18(b)**: a top view of the structure of Figure 18(a);
- **Figure 19 (a)**: a side view of a structure according to the present invention at a high water level;
- **Figure 19(b)**: a side view of the structure of Figure 19(a) at a low water (LW) level;
- **Figure 19(c)**: a side view of a modified version of the structure of Figure 19(a) at a high water (HW) level;
- **Figure 20(a)**: a side view of a structure according to the present invention at a high water (HW) level;
- **Figure 20(b)**: a side view of the structure of Figure 20 (a) at a low water (LW) level;
- **Figure 20(c)**: a side view of a modified version of the structure of Figure 20(a) at a high water (HW) level;
- **Figure 20(d)**: a plan view of a first proposed possible location for one or more of the structures of Figure 20(a);
- **Figure 20(e)**: a plan view of a second proposed possible location for one or more of the structures of Figure 20 (a) ;
- **Figure 20(f)**: a side view of the second proposed possible location of Figure 20(e); and
- **Figure 20(g)**: a plan view of a third proposed possible location for one or more of the structures of Figure 20(a).

### DETAILED DESCRIPTION OF DRAWINGS

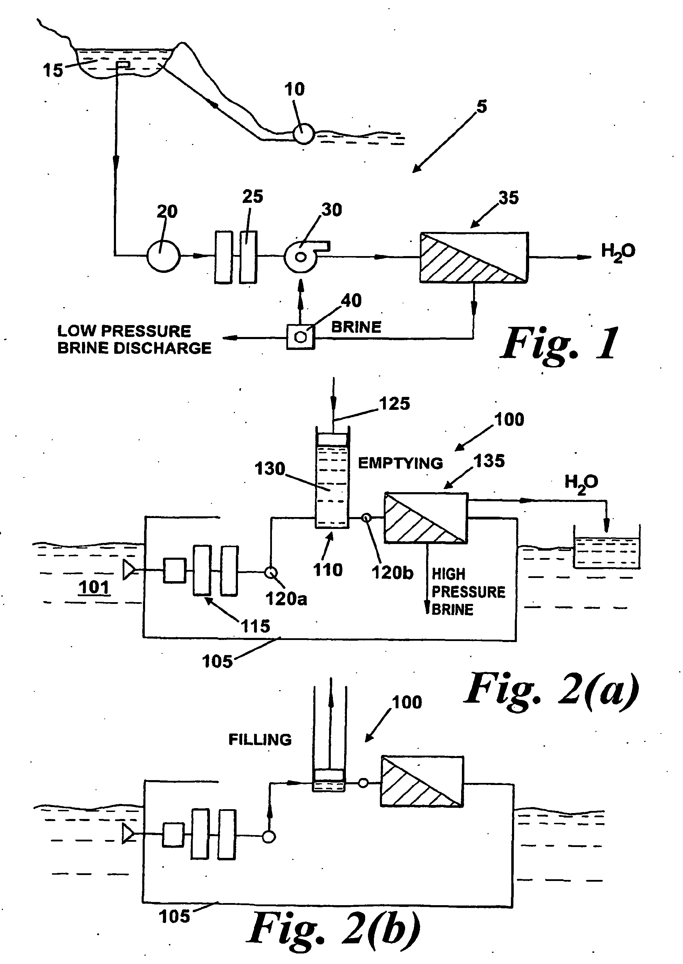

Referring firstly to Figure 1 there is shown a schematic view of an RO (Reverse Osmosis) desalination apparatus, generally designated 5, according to the prior art. The RO desalination apparatus 5 comprises an electrical pump 10 for pumping sea water from the sea to a basin 15, e.g. a quarry basin, which thereafter is transferred to electrical pump/pre-treatment 20, via filters 25 and through electrical pump 30 to a separation apparatus 35 which separates the sea water into purified water H₂O and brine. The separation apparatus 35 comprises RO elements. The brine then transfers to an energy recovery unit 40.

Referring now to Figures 2 (a) and 2(b) there are shown schematic views of as structure or apparatus, generally designated 100, not in accordance with the present invention. The structure 100 comprises a buoyant member 105 and at least one pump means 110, wherein, in use, the at least one pump means 110 is driven by rise and/or fall of the buoyant member 105, with rise and fall of a level of a fluid within which the buoyant member 105 is placed, e.g. a tidal sea, ocean, estuary or a river (e.g. a river weir). The structure 100 comprises filters 115, inlet valve 120a, and pump means 110, comprising a piston 125 and cylinder 130 arrangement (which empties and fills with the rise and fall of the level of fluid 101, e.g. tide), outlet valve 120b, and a separation means 135 that separates the sea water into water H₂O and brine.

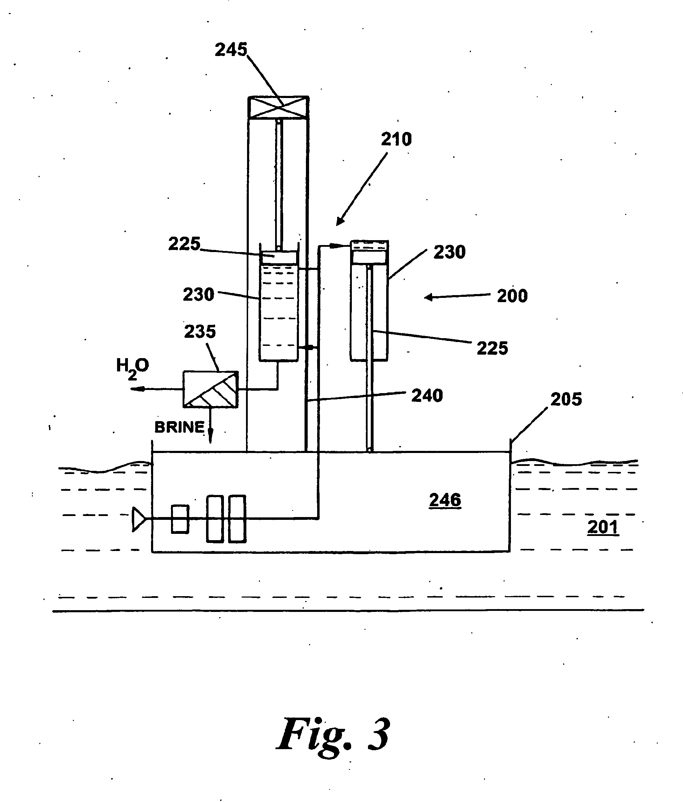

Referring now to Figure 3, there is shown a floating structure or apparatus, generally designated 200, not in accordance with the present invention. Parts of the floating structure 200 are similar to parts of the structure 100 of the first embodiment, like parts being denoted by like numerals, but increased by "100".

The buoyant member 205 comprises at least one chamber 246. There can be provided means for varying the buoyancy of the buoyant member 205, which can include or comprise means for flooding and/or draining the/or each at least one chamber 246.

The buoyant member 205 is beneficially made at least partly from a material typically used for building structures, such as concrete or marine concrete, particularly pre-stressed concrete, or alternatively, reinforced concrete.

As can be seen from Figure 3, the pump means 210 comprises at least two pistons 225 and piston chambers or cylinders 230, which piston chambers 230 fill and empty or empty and fill with a fluid upon rise and/or fall of the level of fluid 201 tide, respectively.

In a beneficial implementation the fluid is pressurised within the apparatus, and there is therefore provided means for pressurising the fluid.

In one implementation the fluid comprises sea water, the rise and fall of the tide, in use, causing at least one piston 25 and piston chamber 230 to move with respect to one another.

For each piston 225 and piston chamber 230, one of the piston 225 or piston chamber 230 is fixed relative to the buoyant member, the other of the piston and piston chamber is fixed, e.g. relative to a fixed position such as a sea bed or the land or to the bottom of the body of water. There is provided means for delivering fluid/sea water to the cylinder comprising an inlet fluid line, and means for exhausting fluid/sea water from the cylinder comprising an outlet fluid line.

As can be seen from Figure 3, there are provided at least one pair of pistons 225 and piston chambers 230 arranged such that, in use, one piston and piston chamber pair operate out of synchronisation with the other piston and piston chamber pair. In other words, as one cylinder 230 fills, the other cylinder 230 empties, and vice versa. This provides that the apparatus can provide useful work both as the fluid level rises and the fluid level falls. The cylinder 230 of one piston 225 and cylinder pair is fixed to a post 240, while the cylinder 230 of the other piston and cylinder pair is fixed to the post 240, e.g. by a gantry 245.

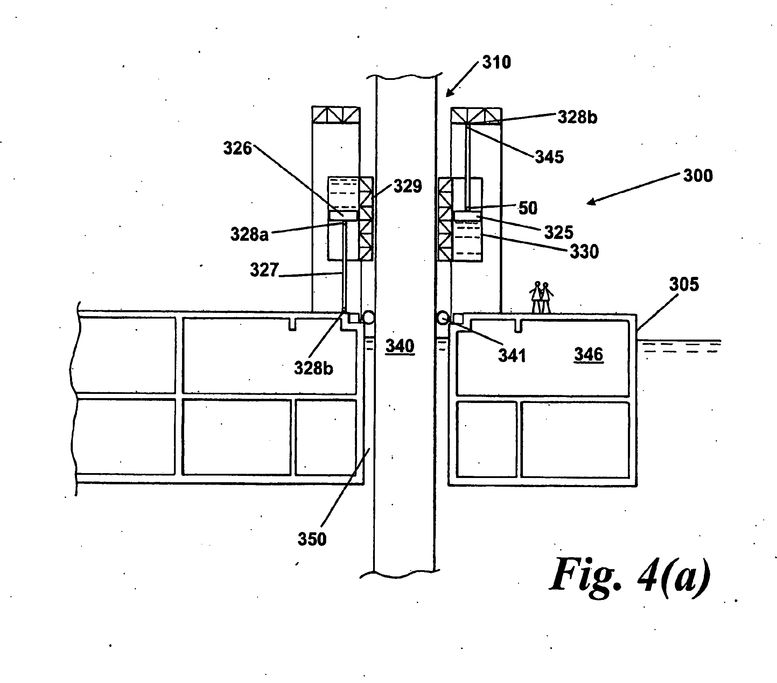

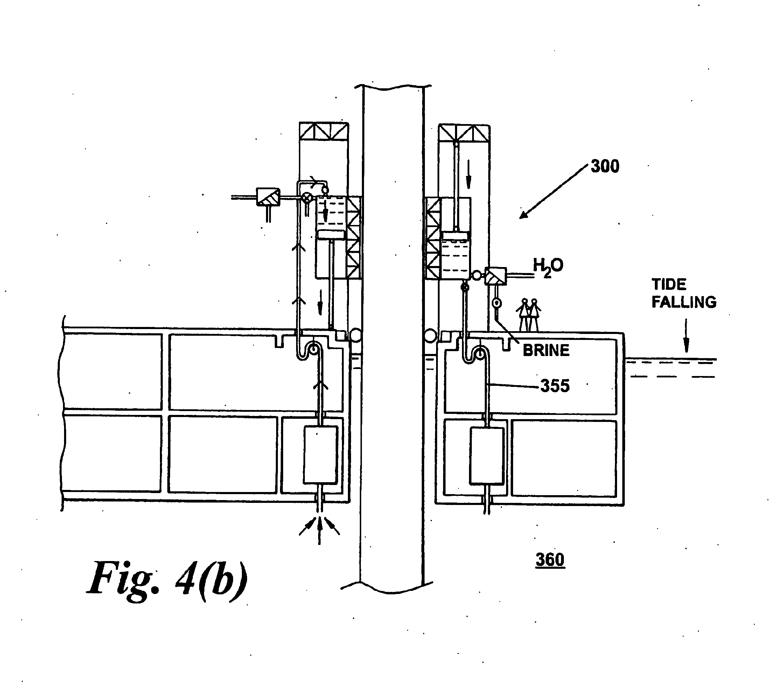

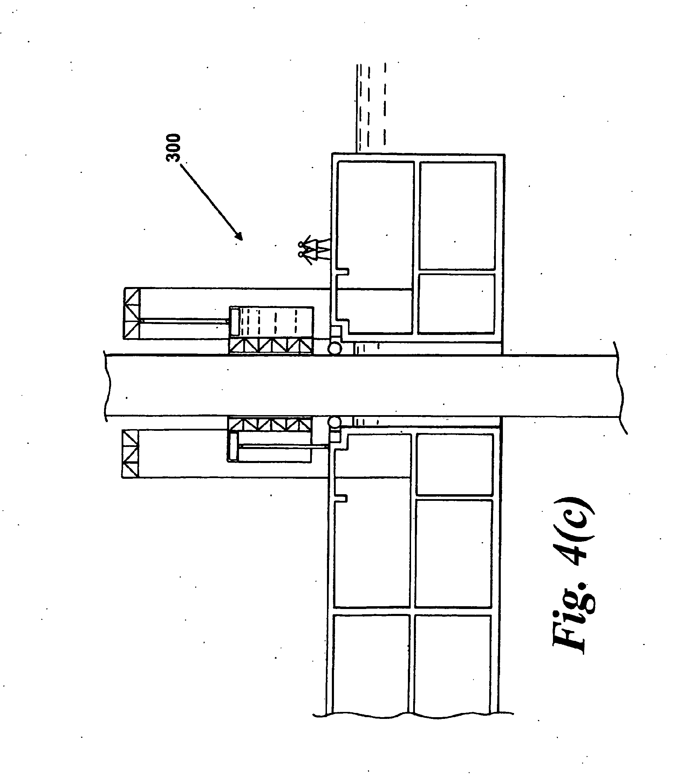

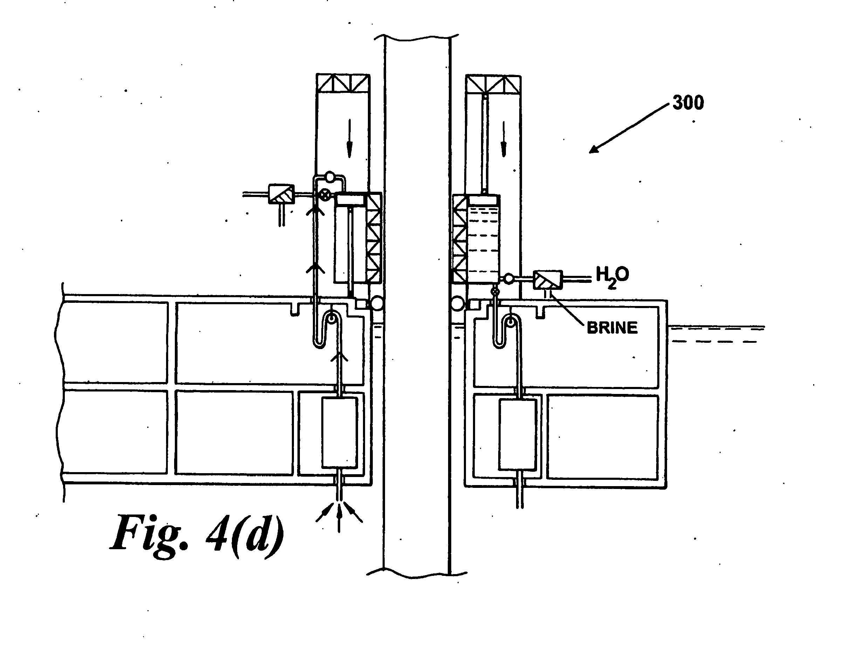

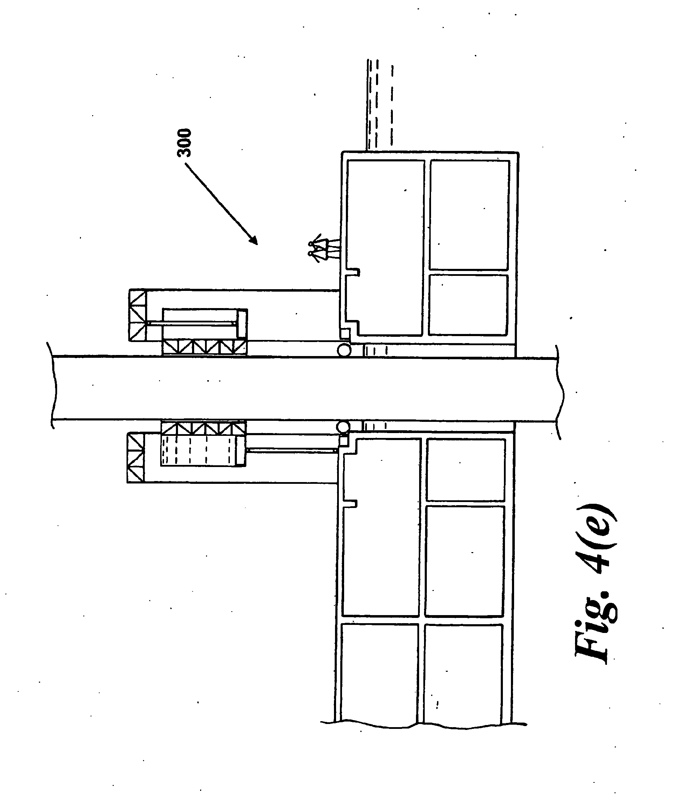

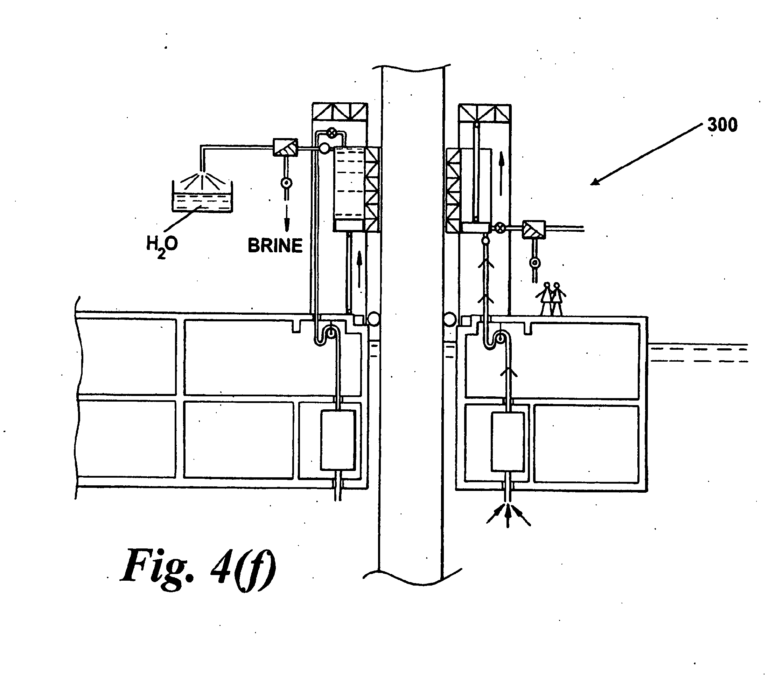

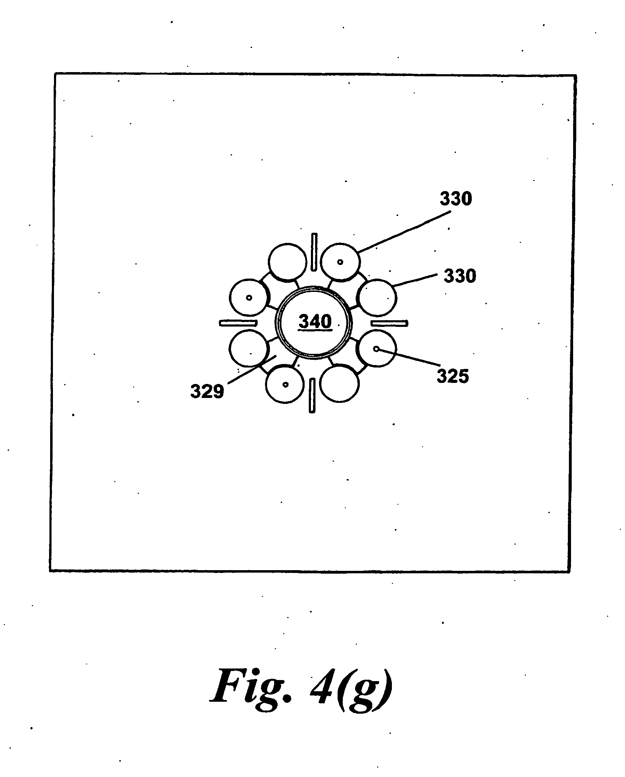

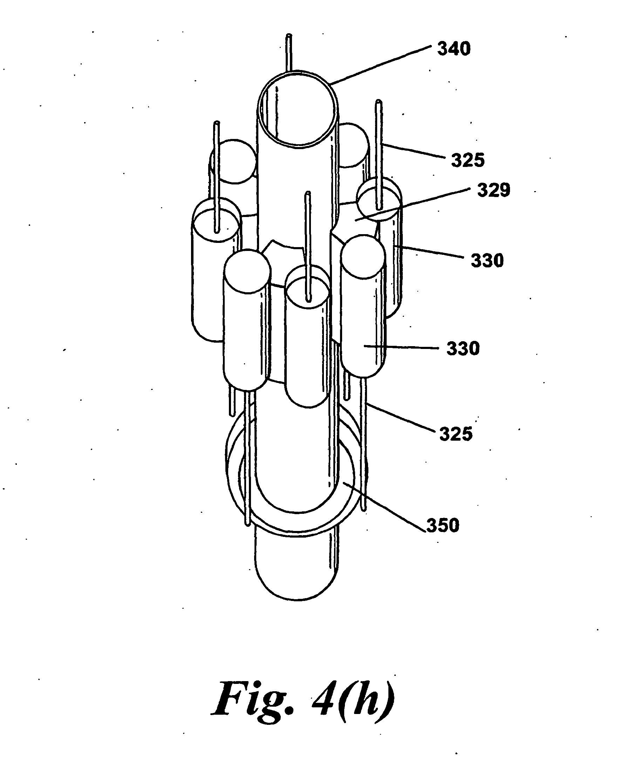

Referring now to Figures 4(a) to 4(h) there is shown a structure or apparatus generally designated 300, according to the present invention. The floating structure 300 is similar in many respects to the structure 100, like parts being denoted by like numerals, but increased by "200".

The buoyant member 305 comprises a rectilinear body comprising a rectilinear array of rows, columns, and/or levels (or storeys/floors) made up from individual walled chambers. For example, in this implementation there are three chambers in a row, five chambers in a column, and two levels of chambers, i.e. thirty chambers in total. A chamber typically has a height of 5m, a length of 27m, and a breadth of 27m.

Each cylinder can, however, have a typical volume of between 125ft³ and 500ft³, e.g. typically around 250ft³. Therefore, with two tides per day, a single piston and chamber can pump twice that volume of water per day.

It will be appreciated by skilled persons that these dimensions are given for exemplification only, actual selected sizes varying dependent upon, e.g. the location, predicted fluid level/tidal range, and desired pumping performance.

As can be seen from Figures 4(a) to 4(f) the buoyant member 305 comprises a plurality of chambers 346 that are provided in an array or honeycomb like arrangement. As can also be seen from Figures 4(a) to 4(h) for each pair of pistons 325 and piston chambers 330, one of the piston 325 and piston chamber 330 is fixed on or relative to the buoyant member 305, and the other of the piston 325 and piston chamber 330 is fixed relative to a fixed position. Indeed, the other of the piston 325 and piston chamber 330 is fixed relative to the sea bed in this embodiment by at least one post 340 or the like. The/each post 340 can be piled into the sea bed.

In this embodiment the buoyant member 305 comprises at least one aperture or through hole 350 through which at least one, and indeed preferably only one, of the at least one posts 340 extends. Pipes 335 leading from the sea 360 to the chambers 330 are flexible in this embodiment so as to allow for the rise and fall of the tide, as will be appreciated from Figures 4(a) to 4(f).

The/each piston 325 comprises a piston member 326 slidable in sealing engagement with the/the respective cylinder 330. The piston 325 comprises a piston rod 327. One end of the piston rod 327 is attached to the piston member 326 by a universal joint or knuckle 328a. Another end of the piston rod 325 is attached to either the buoyant member 305 or to a gantry 329 on the post by another universal joint or knuckle 328b. Provision of such allows for lateral play between the buoyant member 305 and post 340. The cylinders 330 are slidably movable but fixably mounted on the post 340 by means of a slidable locatable or lockable cradle or bushing 32a.

As can be seen from Figure 4(a), guide means 341 is provided around the circumference of the aperture 350 so as to accommodate for lateral movements between the buoyant member 305 and the post 340. The guide means 341 comprises a plurality of rolling dampers circumferentially disposed around the aperture 350. Each rolling damper comprises a roller member or wheel and a shock absorbing member.

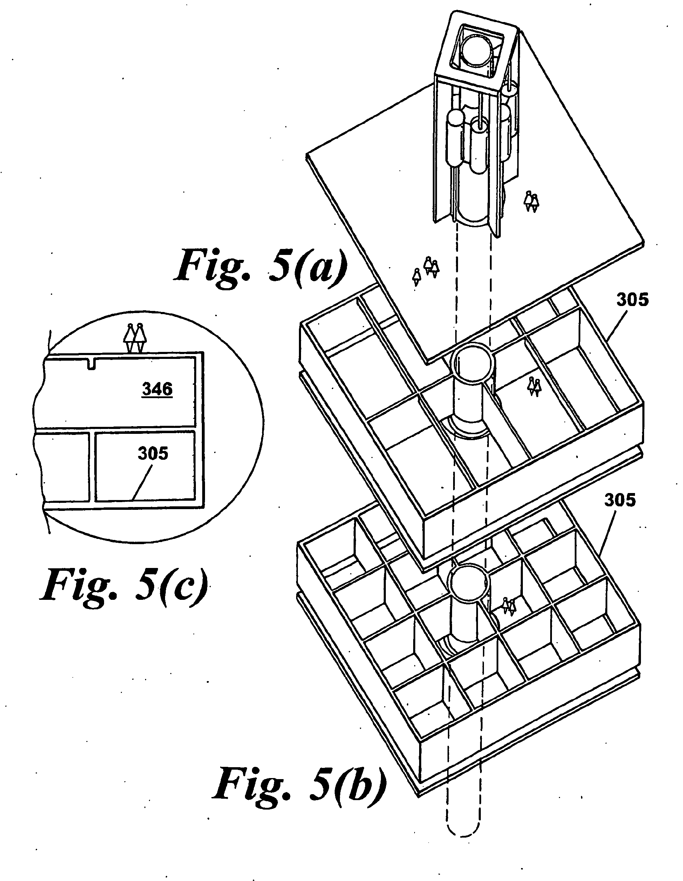

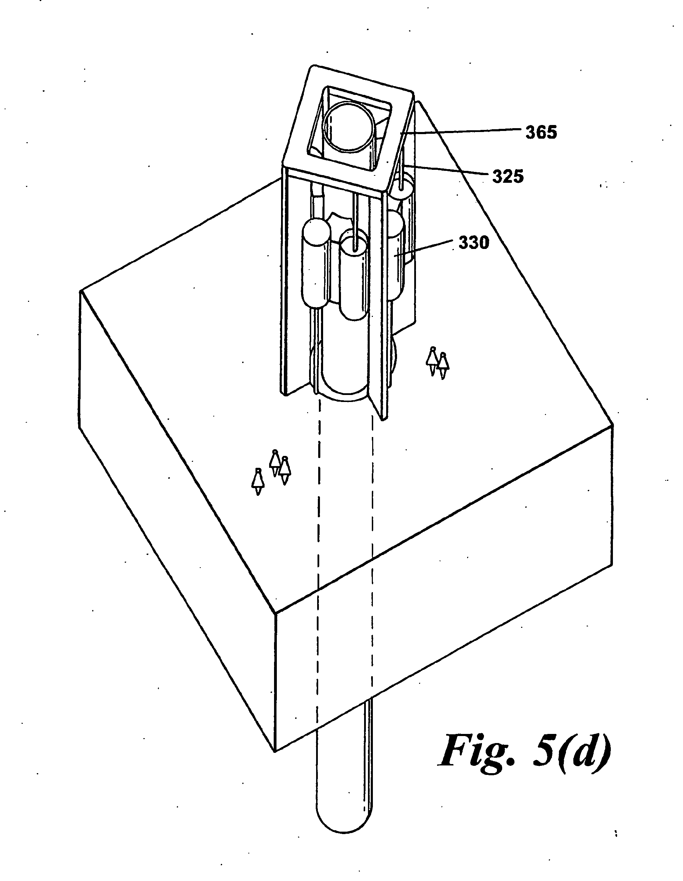

Referring now to Figures 5 (a) to 5(c) there are shown cutaway perspective views of first and second buoyant members 305 for use in the floating structure 300 of Figures 4(a) to 4(f). Also shown in Figure 5(d) is an improvement to the floating structure of Figures 4(a) to 4(c), including a stool gantry 365.

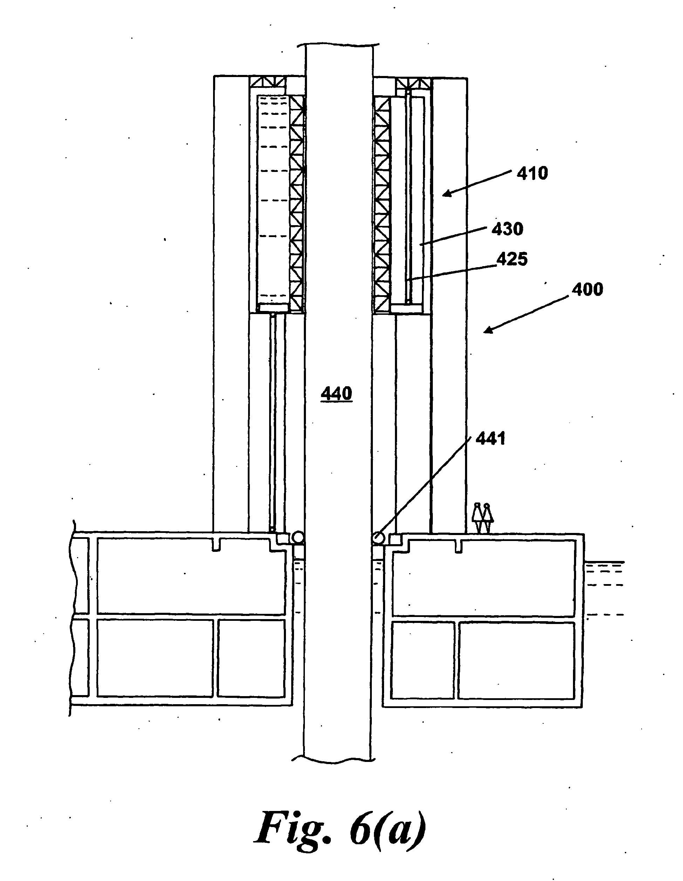

Referring now to Figure 6 (a) there is shown a side view of a structure or apparatus, generally designated 400, according to the present invention at low water. Parts of the floating structure 400 are similar to parts of the structure 100 , like parts being denoted by like numerals. The structure 400 comprising a single hydraulic drive.

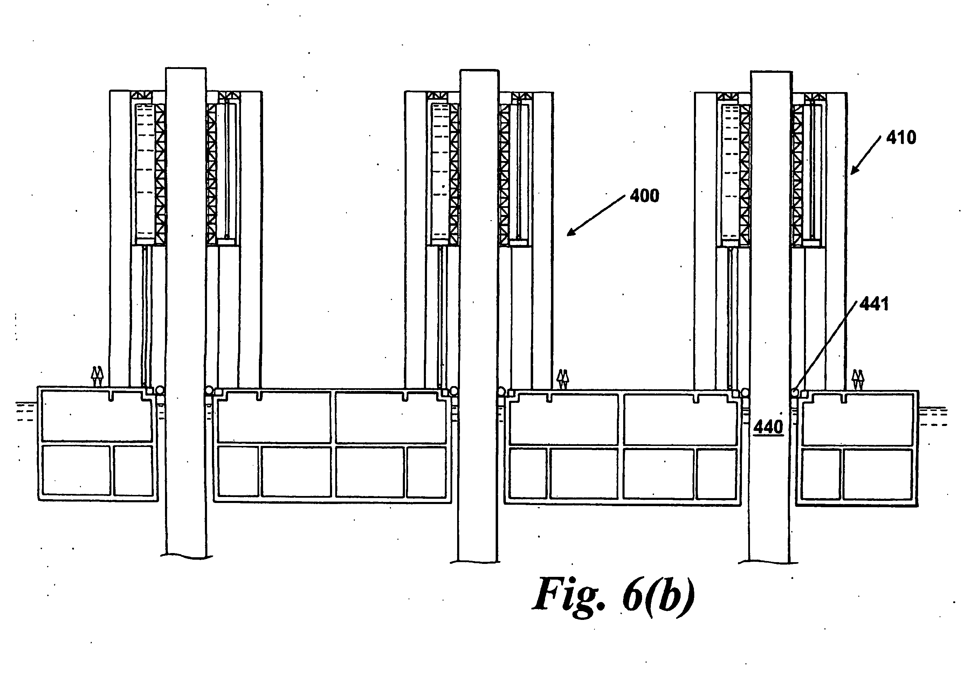

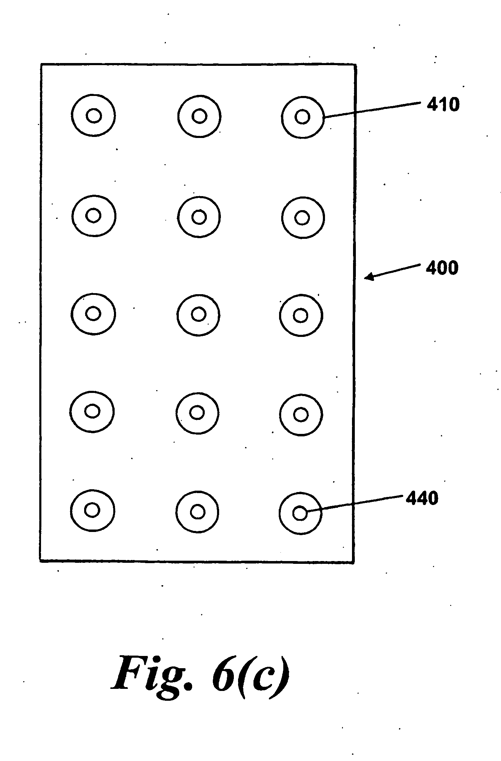

Referring now to Figures 6(b) and 6(c) there is shown a side view of a modified version of the structure 400 comprising a plurality of pump means or hydraulic drive units 410 at low water. As can be seen be seen from Figure 6(c) there are provided a plurality of pump means 410 symmetrically disposed in relation to one another. Each pump means 410 comprises or is provided with an associated post 440. The posts 440 are symmetrically disposed in relation to one another. This provides for structural integrity of the structure 400.

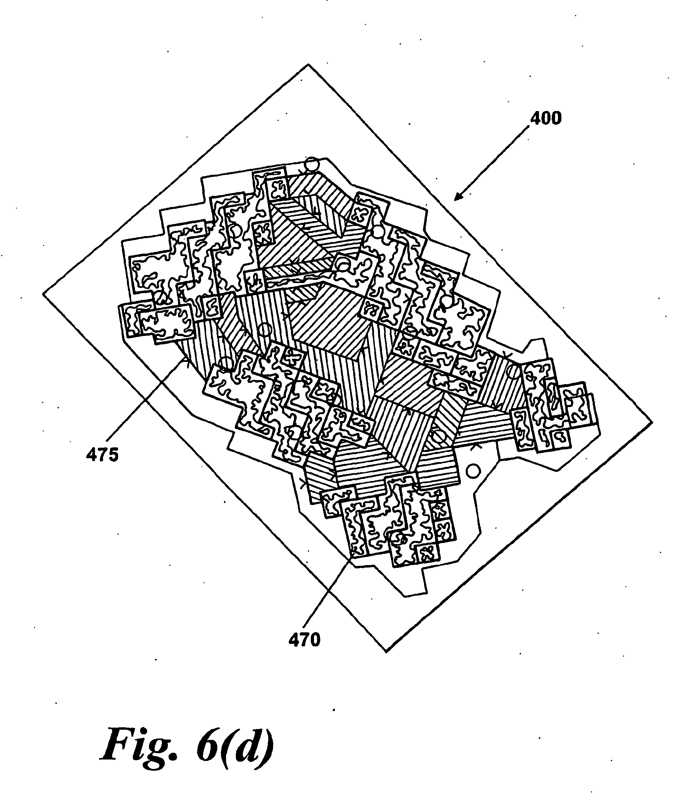

Referring now to Figure 6(d) there is shown a top view of the structure 400 of Figure 6(b) modified to provide landscaping 470, and at least one enclosed accommodation space or dwelling module475.

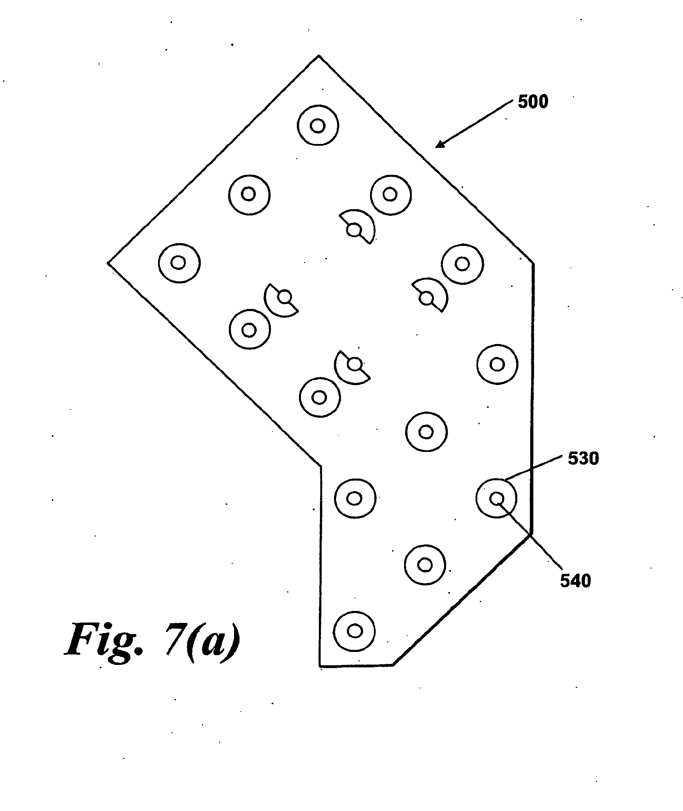

Referring now to Figure 7(a) there is shown a top view of a structure generally designated 500 according to the present invention.

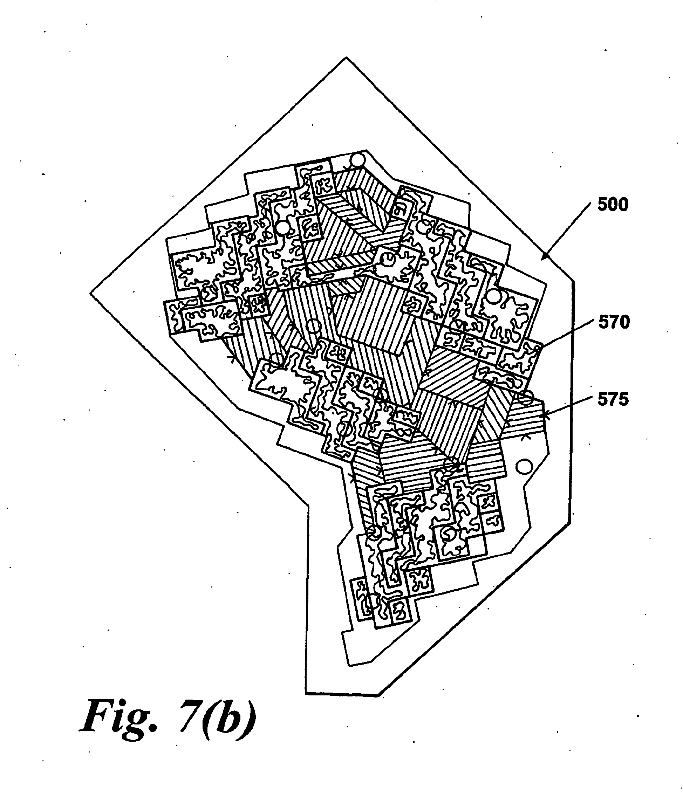

Referring next to Figure 7(b) there is shown a top view of the floating structure 500 of Figure 7(a) provided with landscaping 575 and at least one enclosed accommodation space or dwelling module 570.

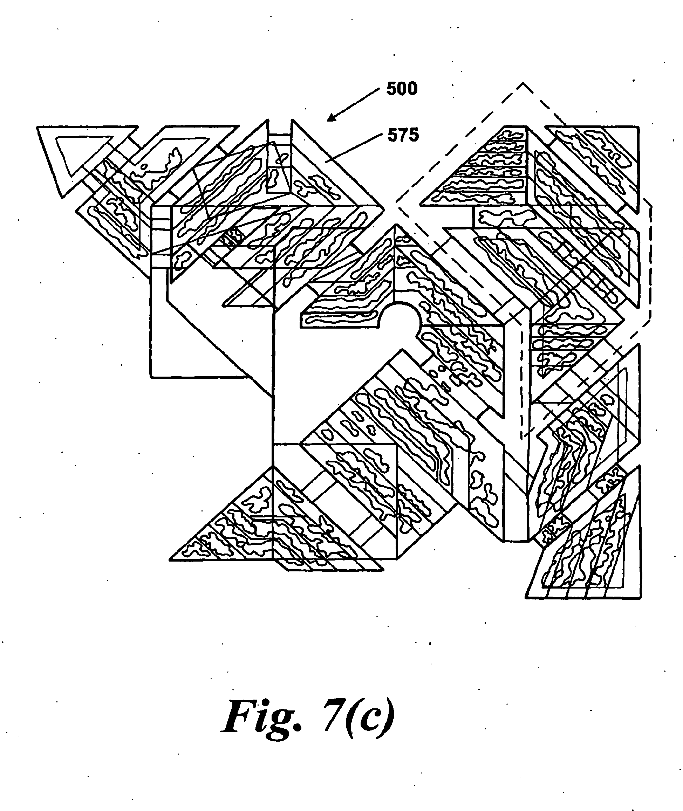

Referring now to Figure 7(c) there is shown a top view of a plurality of enclosed accommodation space or dwelling modules 570 of the structure 500 of Figure 7(b) arranged to form a terraced landscape.

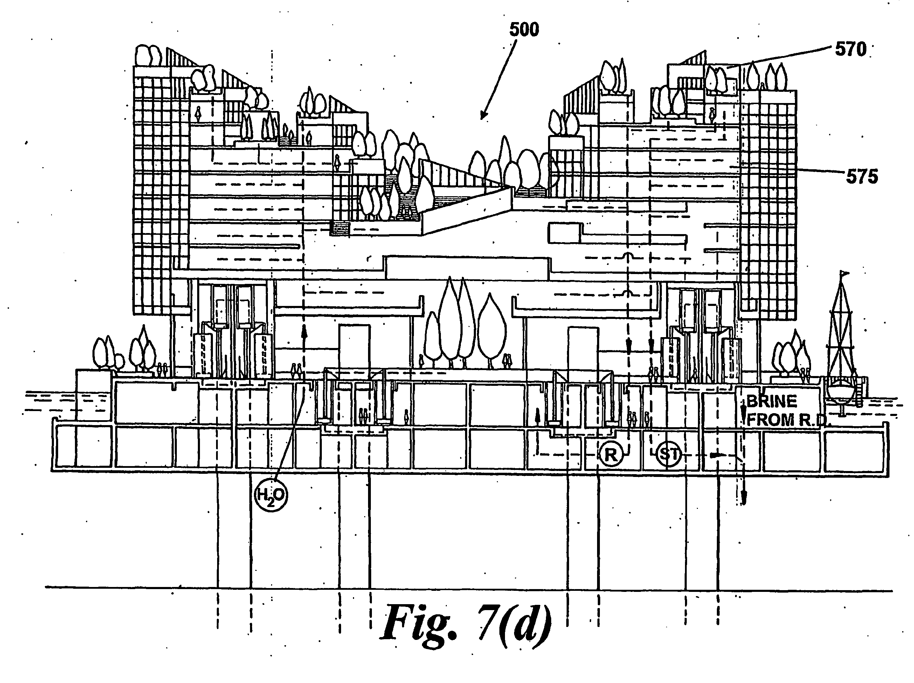

Referring to Figure 7(d) there is shown a side view of the terraced landscape comprising a plurality of the enclosed accommodation spaces or dwelling module(s) 570 of Figure 7(b).

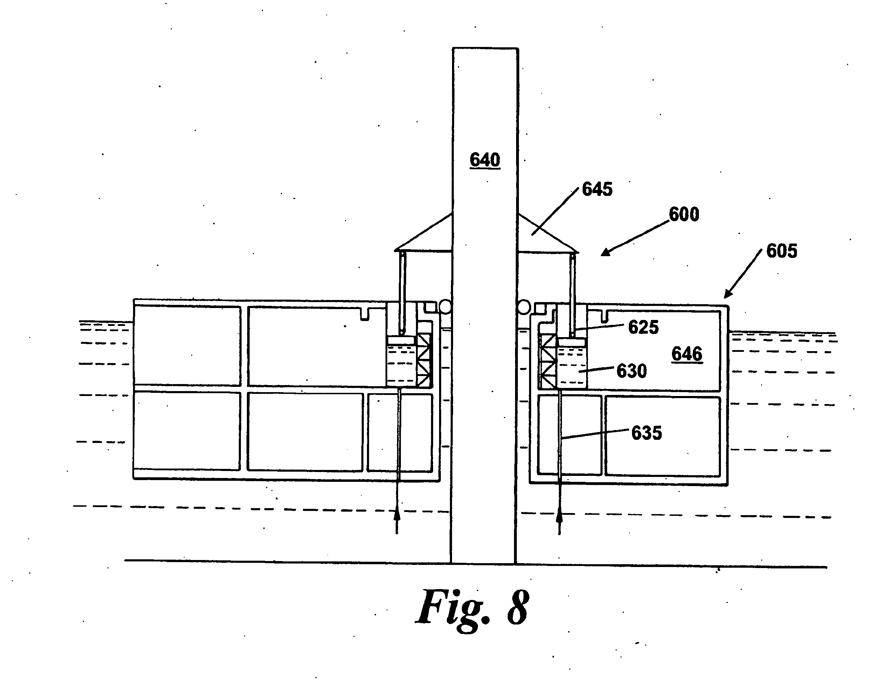

Referring next to Figure 8 there is shown a side view of a structure or apparatus, generally designated 600, according to the present invention at mid-tide. As can be seen, parts of the structure 600 are similar to parts of the floating structure 100, like parts being denoted by like numerals, but increased by 500.

As can be seen from Figure 8, in this embodiment the chambers 630 are provided within the buoyant member 605, and pipework 635 is rigid or inflexible.

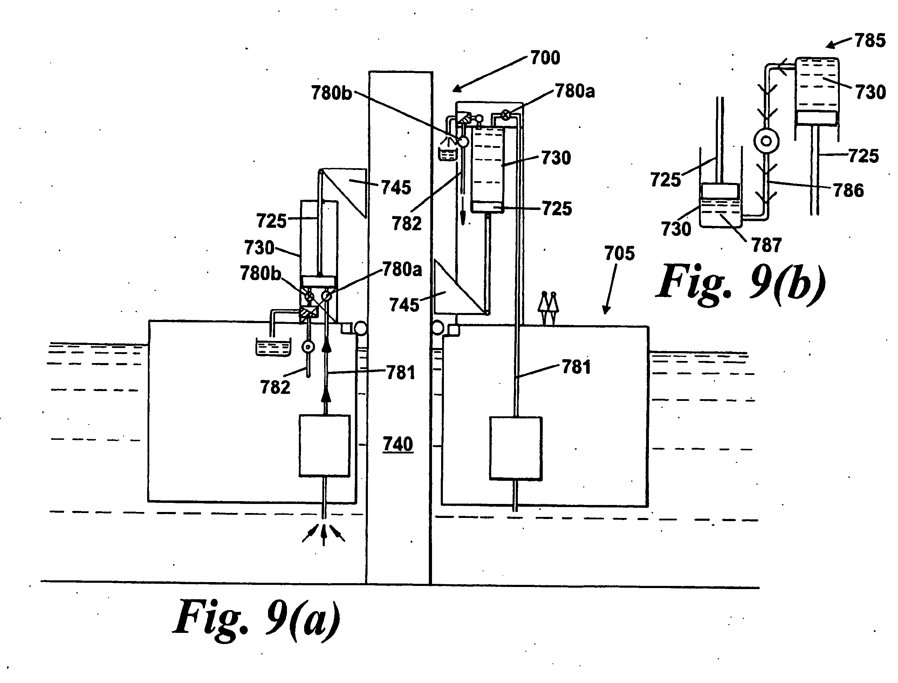

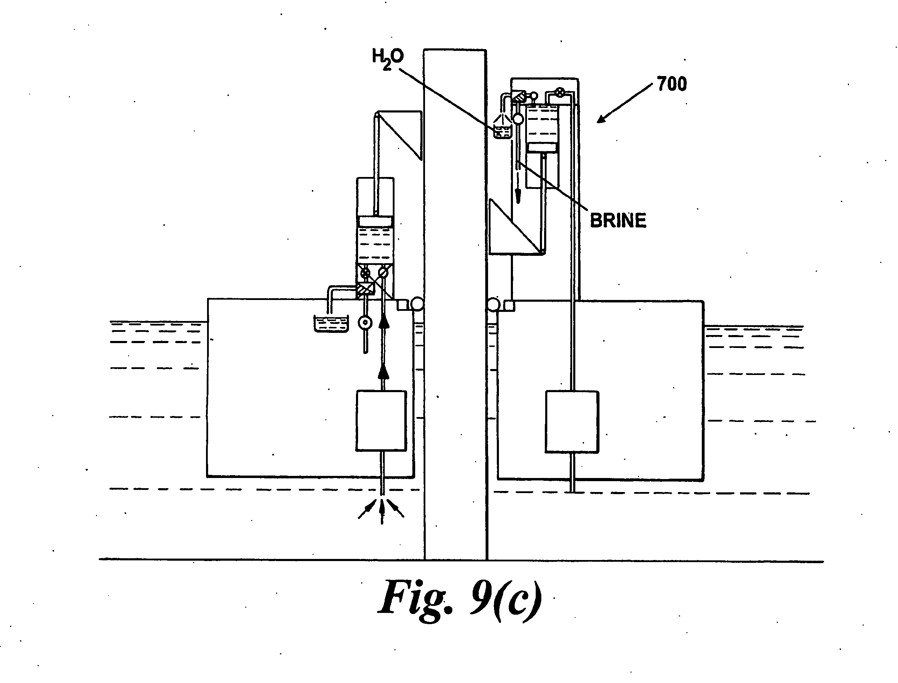

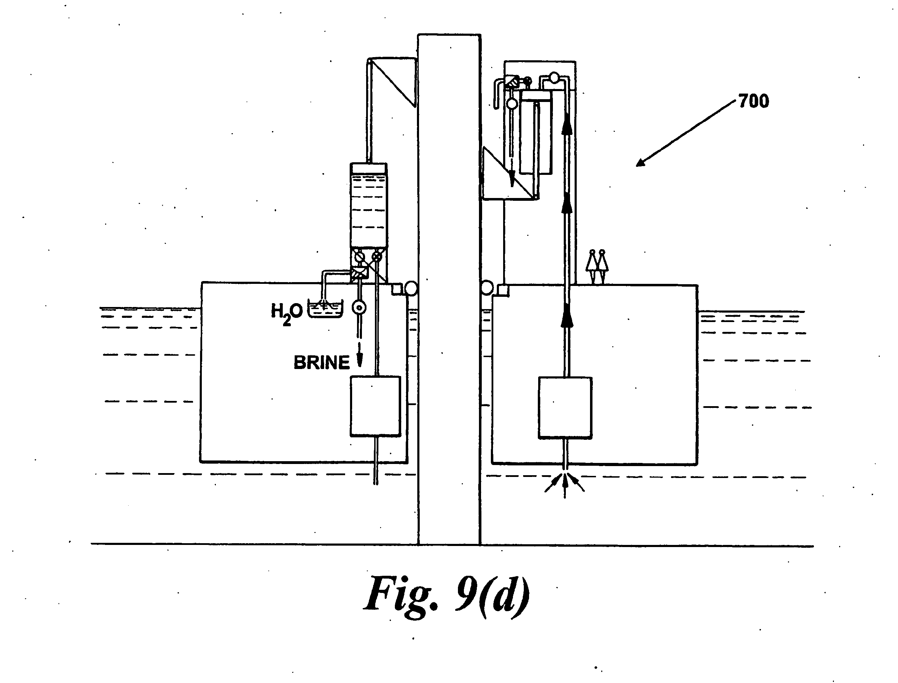

Referring to Figures 9 (a) to 9 (d) there is shown a series of views of a structure or apparatus, generally designated 700 according to the present invention, and including associated hydraulic circuitry. As can be seen from Figures 9(a), 9(c), and 9(d) there is provided valve means 780a, 780b for opening an inlet line 781 and closing an outlet line 782 during fluid delivery to a chamber 730, and for closing the inlet line 781 and opening outlet line 782 during fluid exhaust from a chamber 730.

Referring now to Figure 9(b) there is shown a simplified side view of part of a hydraulic circuit 785 according to a modification of the structure 700 of Figure 9(a). In the seventh embodiment of Figure 9(a), and indeed in all other preceding embodiments, the fluid is provided from a body of fluid or water in which the buoyant member 705 is located. In the modification of Figure 9(b) there is provided a hydraulic line 786 between the chambers 730 of each pair of piston 725 and cylinder 730 arrangements. In such arrangements, in use, a further fluid is sealed within the pair of piston chambers 730 and the line 786. This further fluid 787 is transferred back and forth between the chambers 730 as the fluid or water level rises and falls. The further fluid 787 beneficially comprises an oil.

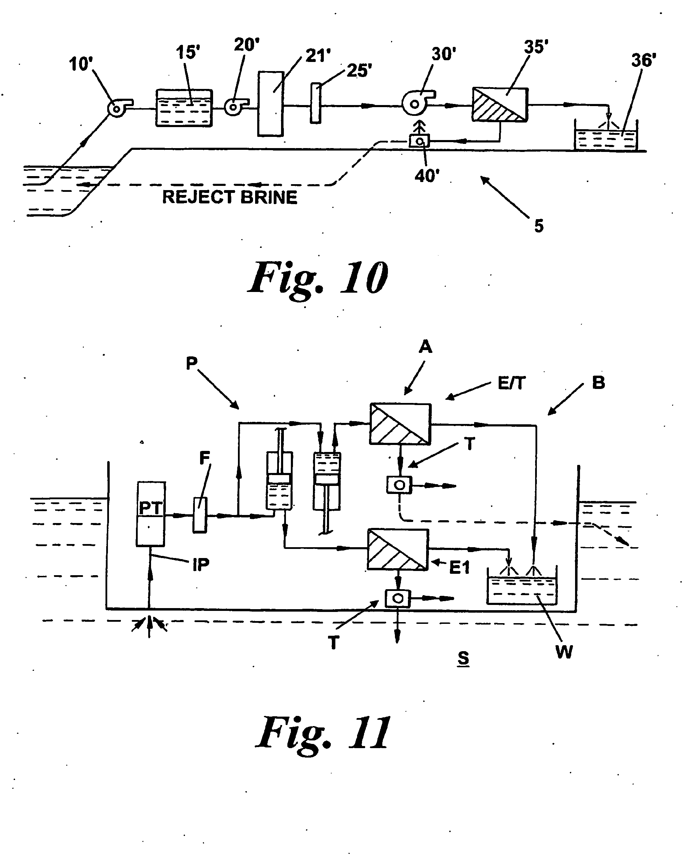

Referring now to Figure 10 there is shown a schematic view of a water purification apparatus 5' according to the prior art. The water purification apparatus 5' comprises an electrical pump 10' for pumping sea water to a storage chamber 15', then to an electrical pump 20' to pre-treatment means 21' and filter 25' , and via a further electric pump 30' to RO (Reverse Osmosis) elements 35', so as to provide fresh water product to a tank 36' and high pressure brine to an energy recovery unit 40' to supplement any pump energy requirement. The brine is thereafter transferred back to the sea.

Referring now to Figure 11 there is shown a schematic view of a water purification and/or electrical generator apparatus A not in accordance with the present invention. The water purification and/or generator apparatus A includes a pump device B comprising a buoyant member 105;205;305;405;505;605;705 according to any of the disclosed embodiments of the present invention.

In use, sea water enters an inlet pipe IP (335,635) and is fed to a pre-treatment means PT, thence to filters F, thence to a pump device P comprising a buoyant structure 100;200;300;400;500;600;700 according to one of the embodiments of the present invention. Pressurised sea water is then transferred from the piston chambers 130;230;330;430;530;630;730 to RO (Reverse Osmosis) elements E to divide the sea water into fresh water product and/or to generate electricity such as by hydraulic turbines T or the like as will be appreciated by those skilled in the art. Energy may be recovered from high pressure brine from the RO elements. The fresh water is transferred to a holding tank H, and the brine rejected and transferred back into the sea S. The electricity and/or water can then be distributed to real estate on the structure.

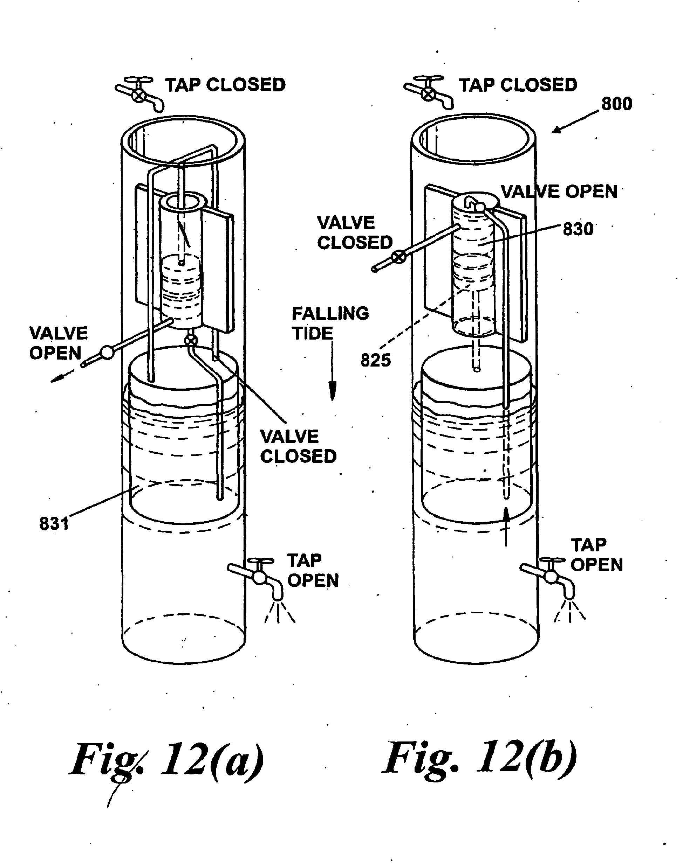

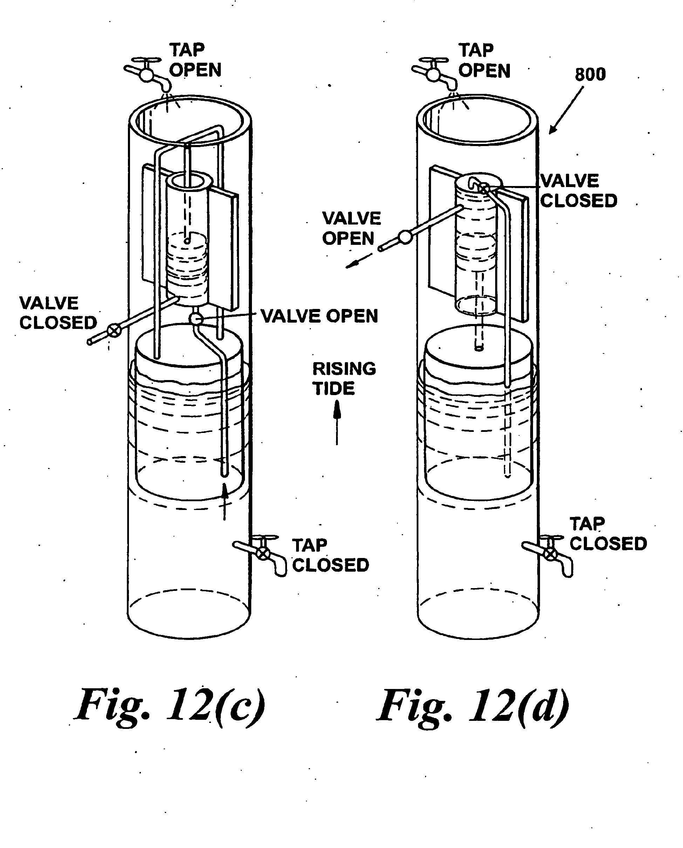

Referring now to Figures 12(a) to 12(d) there is shown a side view of a floating structure or apparatus, generally designated 800, not in accordance with the present invention. There is provided at least one pair of piston 825 and cylinder 830 arrangements, working again out of synchronisation with one another. In one of the piston and cylinder pairs the cylinder 830 is fixed and the piston 825 is attached to a floating mass 831, while in the other, the cylinder 830 is fixed and the piston 825 is attached to the floating mass 831.

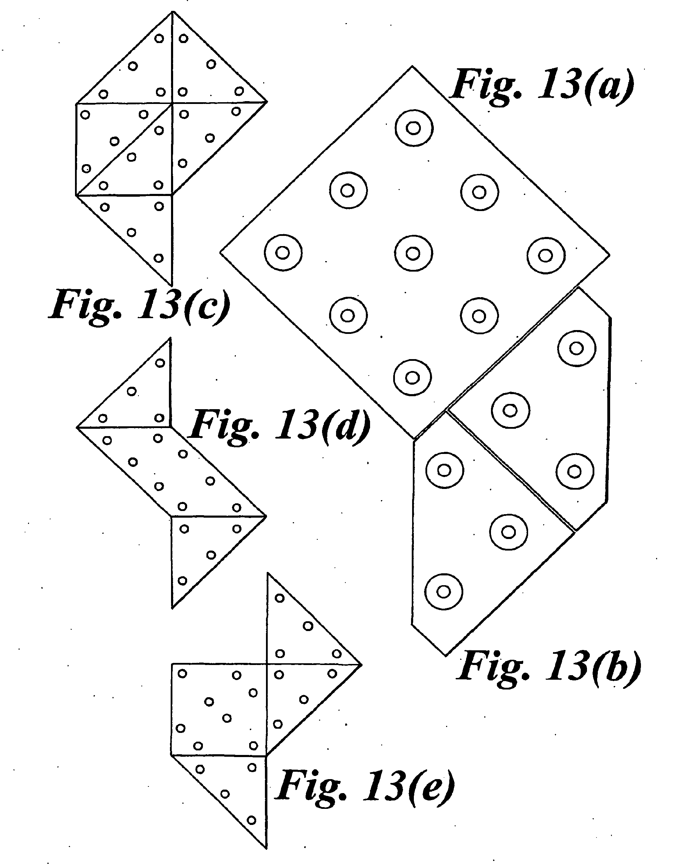

Referring now to Figures 13(a) to 13(e) there is shown a series of top views of symmetrical arrangements of posts suitable for use in embodiments of the present invention.

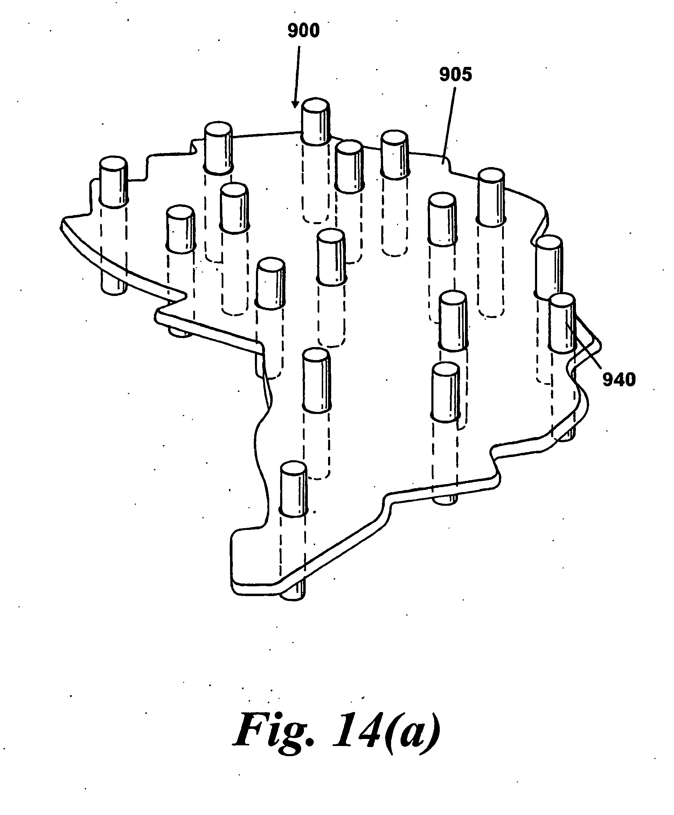

Referring next to Figure 14(a) there is shown a perspective view of a structure or apparatus, generally designated 900, according to the present invention. Parts of the floating structure 900 are similar to parts of the structure 100 , like parts being designated by like numerals, but increased by 800.

As can be seen from Figure 14 (a) the structure 900 comprises a buoyant member 905 and a plurality of posts 940 extending through apertures in the buoyant member 905. The buoyant member 905 rises and falls on the posts 940 with the rise and fall of the tide.

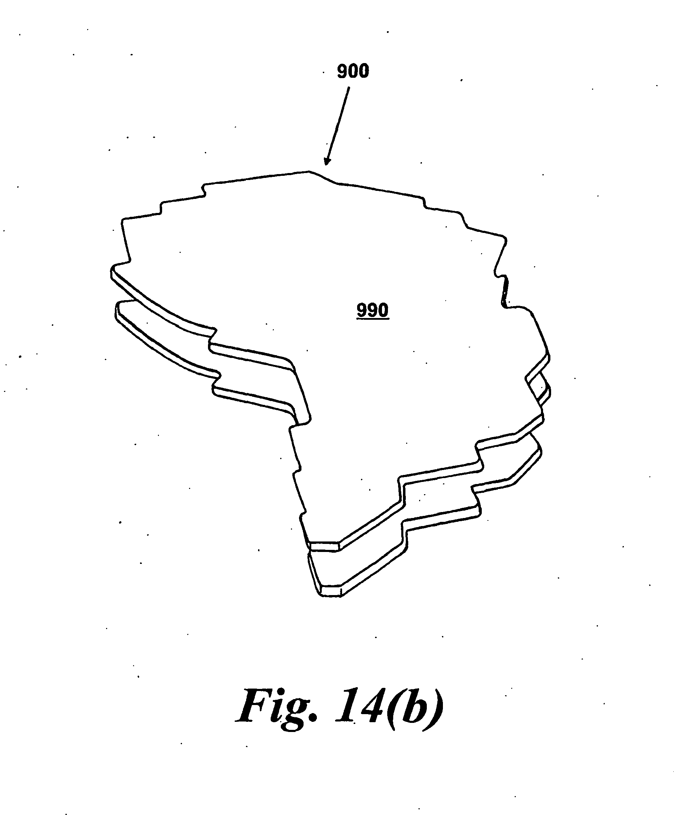

Referring now to Figure 14(b) there is shown a modification to the floating structure 900 of Figure 14(a), wherein a further planar structural member 990 has been provided on top of the posts 940. This further structural member 990 can be provided with real estate such as a building structure (5) comprising one or more enclosed spaces, e.g. domestic space, and/or educational/institutional space, and/or commercial/industrial space. The enclosed spaces are selected from one or more of accommodation means, accommodation modules, housing (such as flats), rooms (such as hotel rooms), office space, meeting rooms, dining rooms, work units, storage areas or the like. Alternatively, or additionally, at least part of a surface, such as an upper/outer surface of the further planar member, may comprise landscaping or vegetation, e.g. at least one grassed area.

Additionally.or alternatively, at least part of the surface, such as an upper surface of the buoyant structure or building structure 900 can comprise a sports playing area such as a tennis court, golf course, golf practice range or the like, or alternatively, a swimming pool or the like.

Additionally or alternatively, at least part of the further planar member 900 comprises or be provided with at least one open or green or grassed space, one greenhouse or other space whether open or closed, for horticulture, agriculture, or the like.

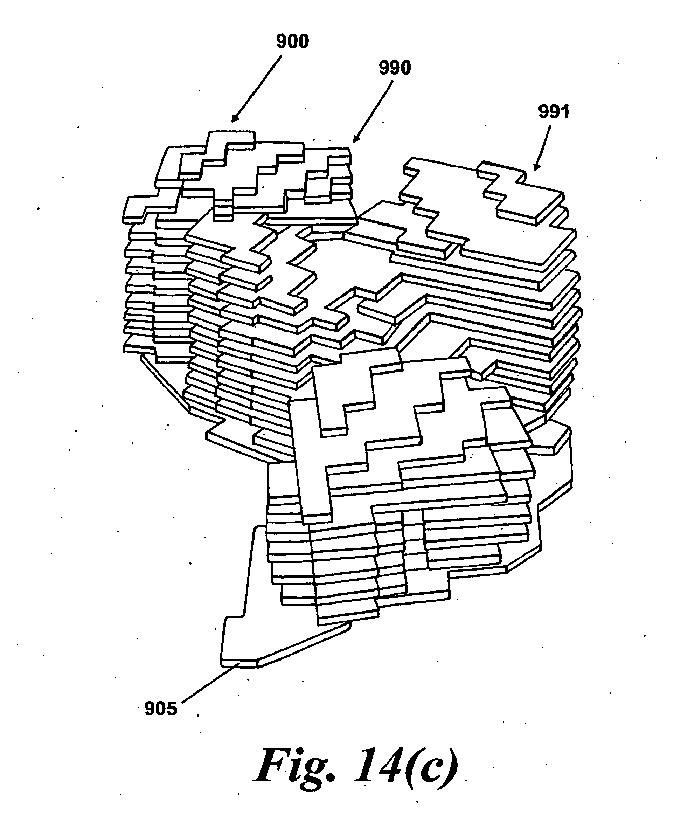

Referring now to Figure 14(c) there is shown a second modification of the floating structure 900 of Figure 14(a). Therein, a high rise building structure 991 is provided on top of the further planar member 990 so as to provide further building structure, accommodation space or the like.

It will be appreciated that dependent on size, weight etc, the real estate may instead or as well as being provided on further planar member 990 may be provided on or in the buoyant member 905.

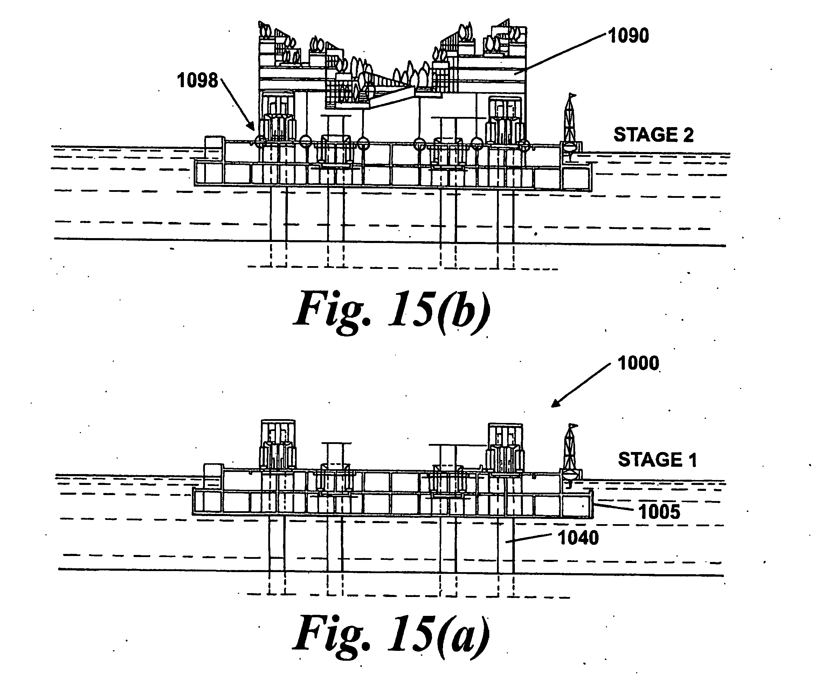

Referring now to Figure 15(a) there is shown an structure or apparatus, generally designated 1000, according to the present invention. Parts of the floating structure 1000 are similar to parts of the structure 100, like parts being designated by like numerals, but increased by 900.

The structure 1000 can be used as a water purification and/or desalination apparatus, and as a power generator apparatus. As can be seen from Figure 15(a), moorings for yachts, pleasure boats or other shipping may be provided on or adjacent the buoyant member 1005.

Referring now to Figure 15(b) there is shown a side view of the structure 1000 of Figure 15(a) according to a first modification, wherein a superstructure 1090 is provided on the buoyant member 1005 associated with the floating structure 1000. The superstructure 1090 can include real estate, e.g. accommodation space or modules, landscaping or the like as hereinbefore discussed.

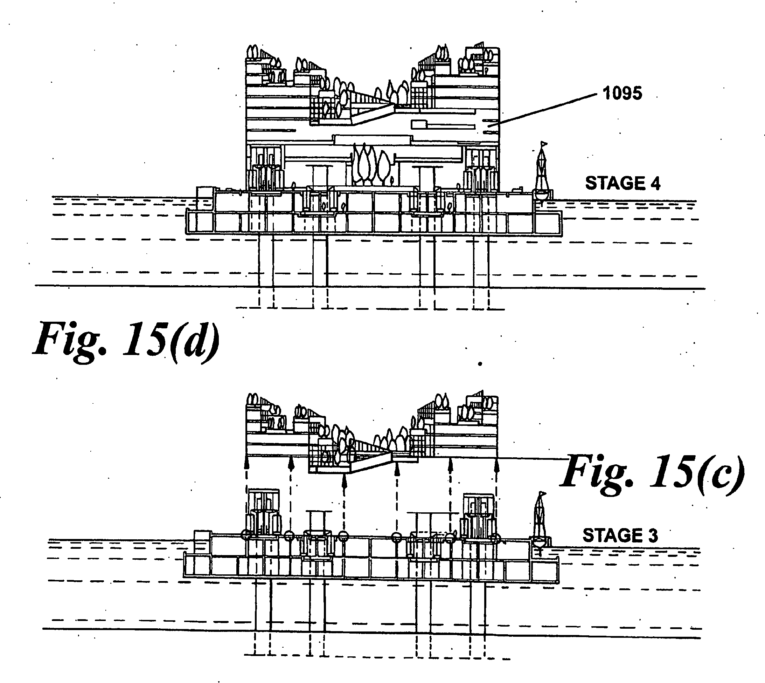

There can be provided means for jacking up or lifting the superstructure 1090 as shown in Figures 15(b) and 15(c), for example, to ensure safety of the further structure if storms are forecast, or large waves or "tsunami" are forecast. Alternatively, once jacked up further accommodation can be provided between the superstructure 1090 and the buoyant member 1005.

Referring to Figure 15(b) hydraulic jacking mechanisms 1098 located at bases of columns 1099 of superstructure 1090 located on the buoyant member 1005 and powered by the tidal pump means can, in use, raise and/or lower the superstructure 1090. The superstructure 1090 can then be fixed at such a new elevation by adding (or removing) additional column structure at base connections thereof. An alternative to jack up methodology would be lift slab technology.

It will be appreciated that superstructure 1090 typically comprises a plurality of floor levels or storeys.As shown in Figure 15(d) further accommodation 1095 or the like can be provided between the superstructure 1090 and the buoyant member 1005.

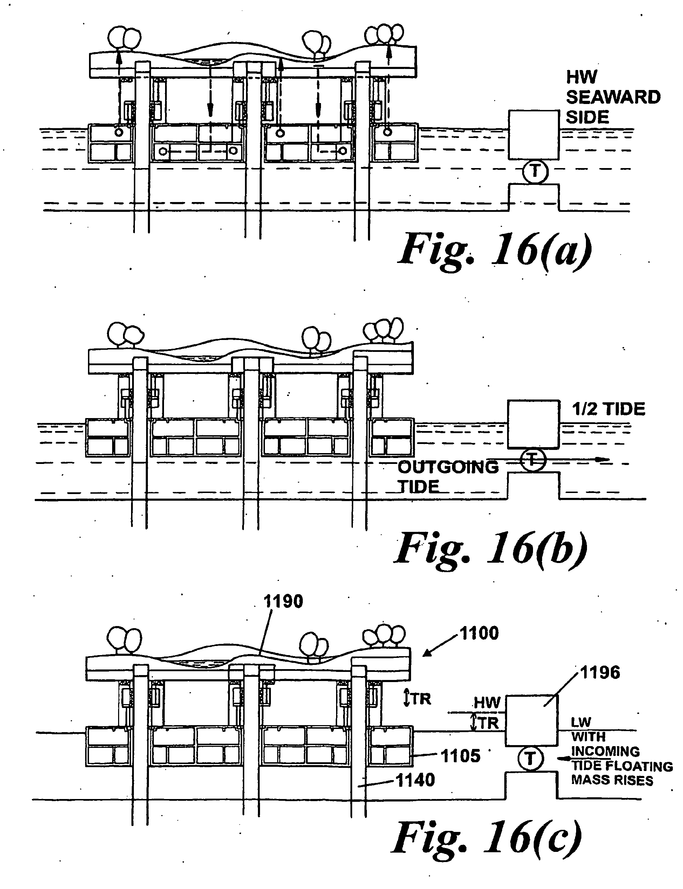

Referring to Figures 16 (a) to 16 (c) there is shown a series of side views of a structure or apparatus, generally designated 1100, according to the present invention. Parts of the floating structure 1100 are similar to parts of the structure 100, like parts being designated by like numerals, but increased by 1000.

The posts 1140 of the structure 1100 support a planar structure 1190, which has landscaping, parkland or a golf course or horticultural areas or the like on a surface thereof. As shown in Figures 16(a) to 16(c) the landscaping can include trees, grass and/or water features, such as irrigation fountains, waterfalls, ponds or the like. The water features may be supplied from the pump means or from grey water (waste water) from the accommodation.

As also shown in Figures 16(a) to 16(c) the floating structure 1100 is provided behind a barrage 1196. The barrage 1196 can have turbines T associated therewith.

Again, the structure 1100 may be used for water purification, RO desalination and/or power generation.

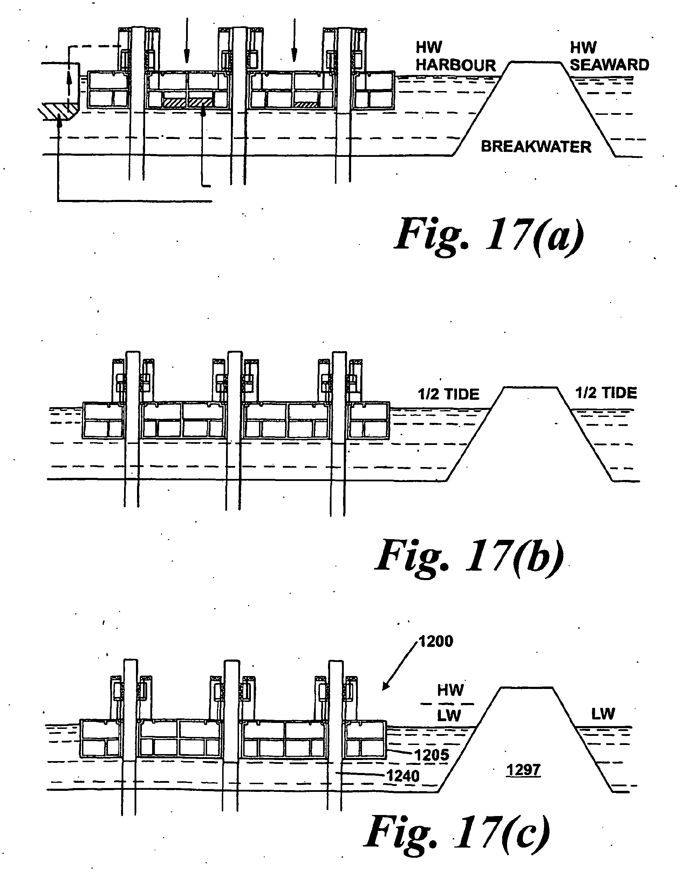

Referring now to Figures 17(a) to 17(c) there is shown a series of side views of a structure or apparatus, generally designated 1200, according to the present invention. Parts of the floating structure 1200 are similar to parts of the floating structure 100, like parts being designated by like numerals, but increased by 1100.

The buoyant member 1205 can be used as a pier or space for containers or cars, e.g. car parking, or the like. The buoyant member of any of the previous embodiments may be used in similar fashion.

As can be seen from Figures 17 (a) to 17 (c) the structure 1200 can be placed adjacent a breakwater 1297 so as to protect the structure 1200 from waves, but expose the structure 1200 to tidal variation.

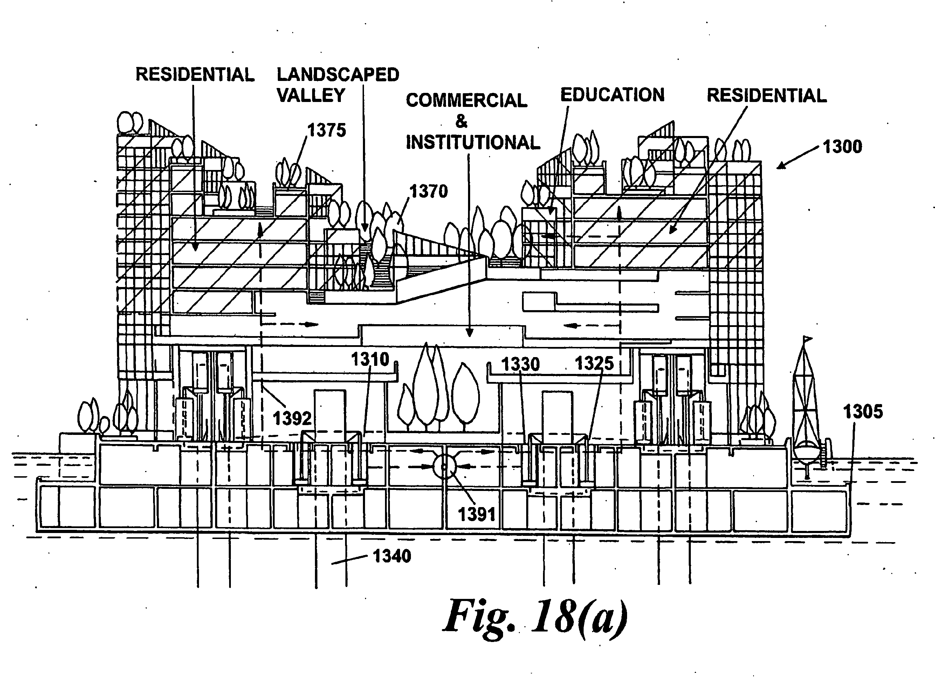

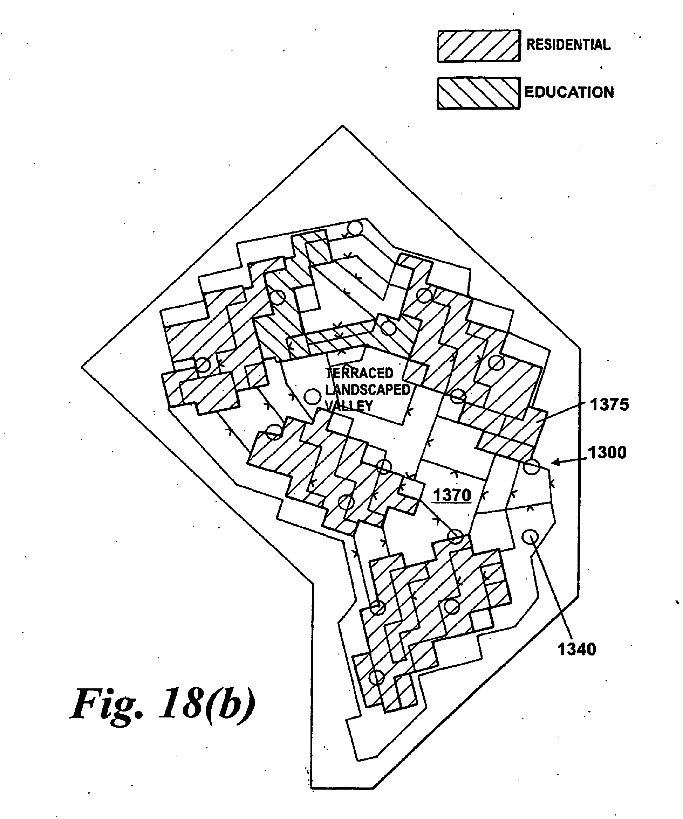

Referring to Figures 18(a) and (b) there is shown an building structure, or apparatus, generally designated 1300, according to the present invention. Parts of the floating structure 1300 are similar to parts of the floating structure 100, like parts being designated by like numerals, but increased by 1200.

Figure 18(a) shows an electrical power generator 1391 operatively connected to a drive, in use, by pump means. From the electrical power generator extends a power/wiring distribution system 1392 (see dashed line) for delivering electrical power to electrical outlet sockets or the like in the residential/educational/institutional/commercial/industri al units within the building structure 1300.

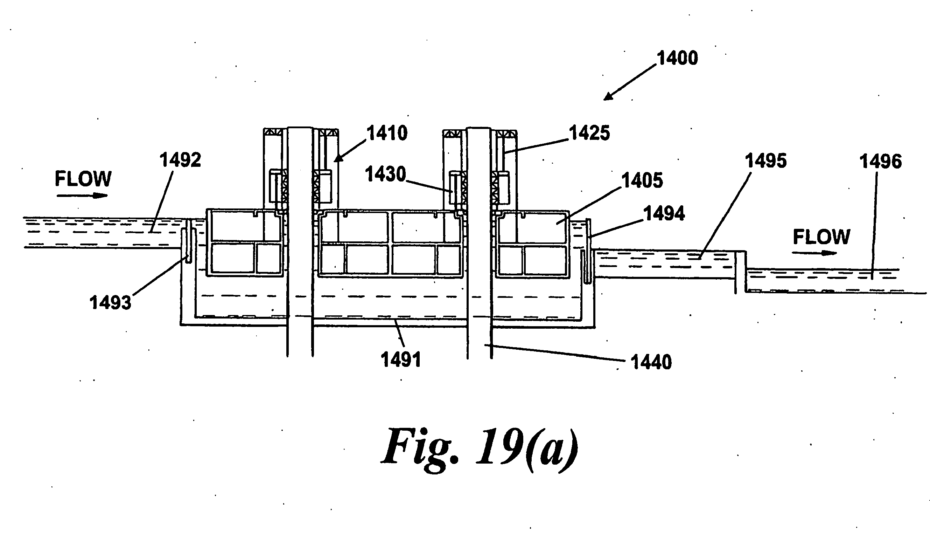

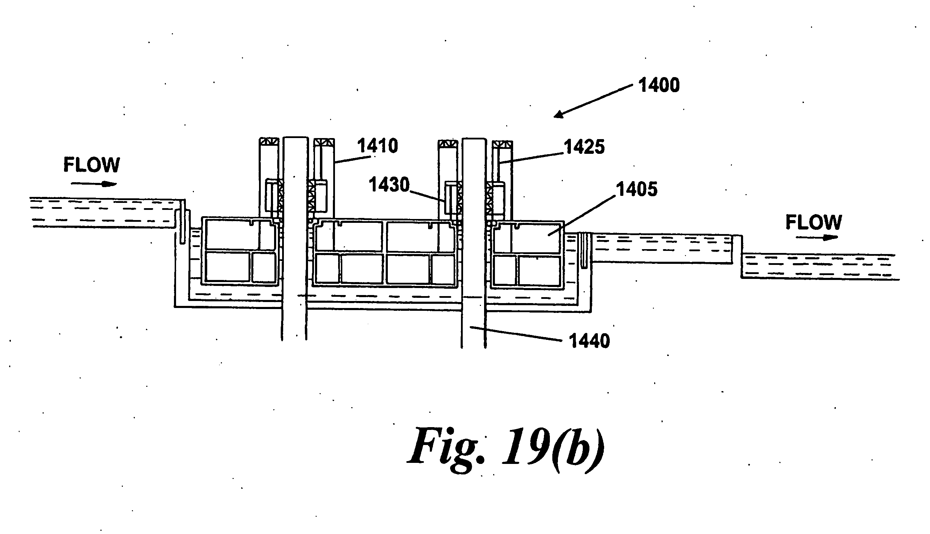

Referring to Figures 19(a) to (c) there is shown an structure or apparatus, generally designated 1400, according to the present invention. Parts of the building structure 1400 are similar to parts of the floating structure 100 like parts being designated by like numerals, but increased by 1300.

As can be seen, the building structure 1400 is provided in a weir 1491 in or adjacent to a flowing river. Water flows from upstream 1492 past openably closable sluice 1493 into weir or basin 1491. As the level of water in weir 1491 rises, buoyant member 1405 rises, thereby operating pump means 1410. To lower the buoyant member 1405, sluice 1494 is opened and water flows into discharge pond 1495 and downstream 1496. The cycle of sequential opening and closing of the sluices 1493, 1494 to raise and lower the buoyant member 1405 can be done many times in a day. This aids in obtaining more output from the apparatus, whether electrical generation and/or water purification/desalination. The Inventor estimates that, dependent upon the river and its rate of flow, an equivalent of 35 tidal days may be available with little or nor disruption to the river flow.

The Inventor presently believes the River Tay and the River Tummel in Scotland to be particularly advantageous sites for such an arrangement.

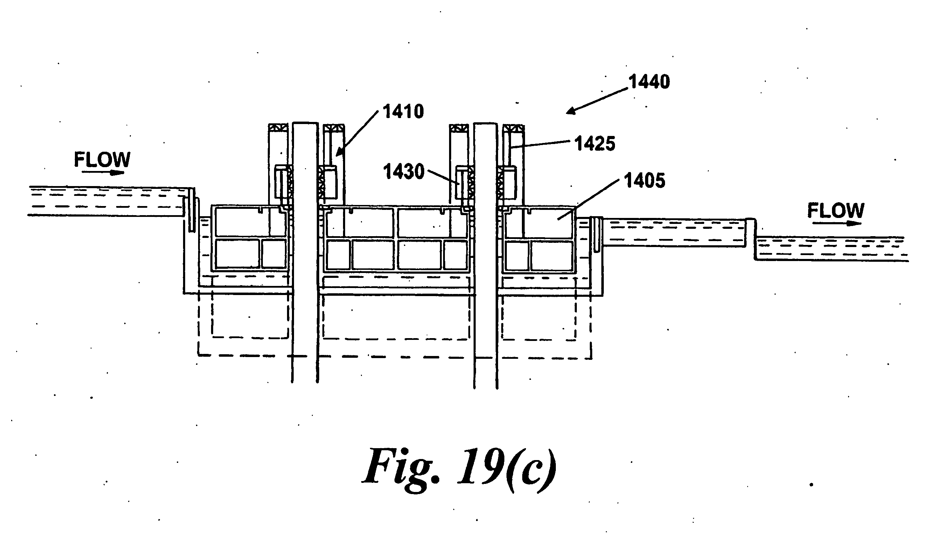

As can be seen from Figure 19(c) in a modification the depth of the weir 1491 is increased, and the depth of the buoyant member 1405 is increased. This therefore increases the load lifted and lowered and therefore the fluid pressure or volume of the fluid pressurised.

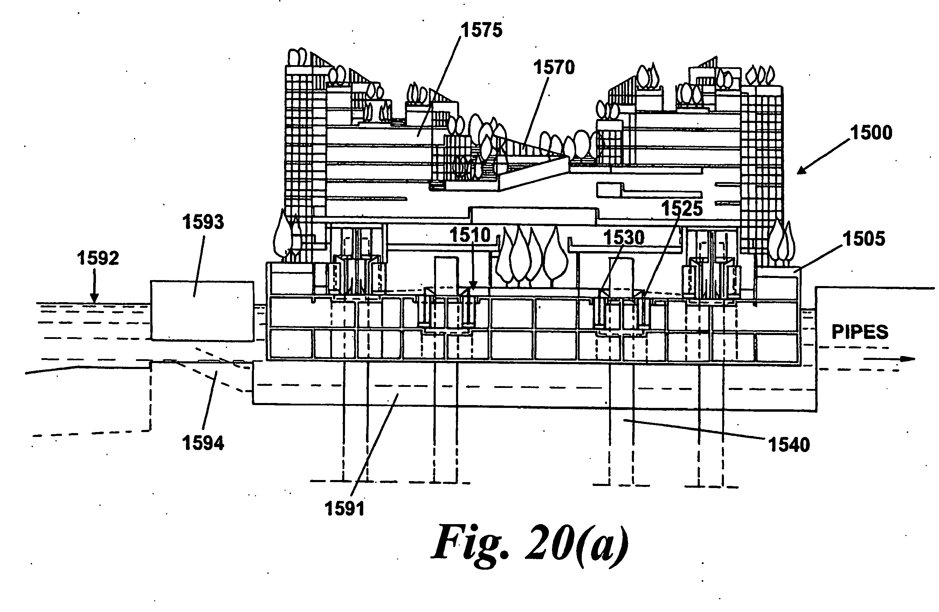

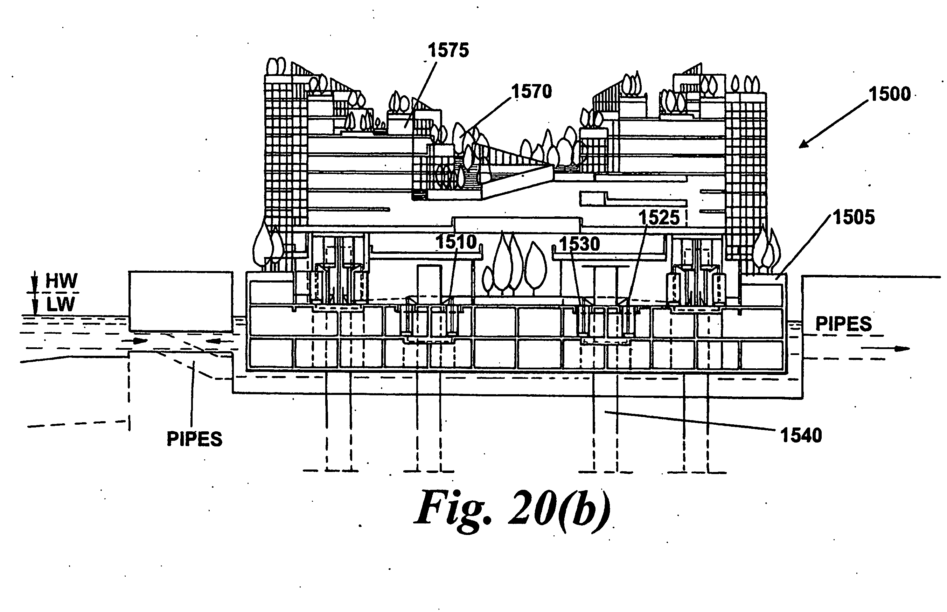

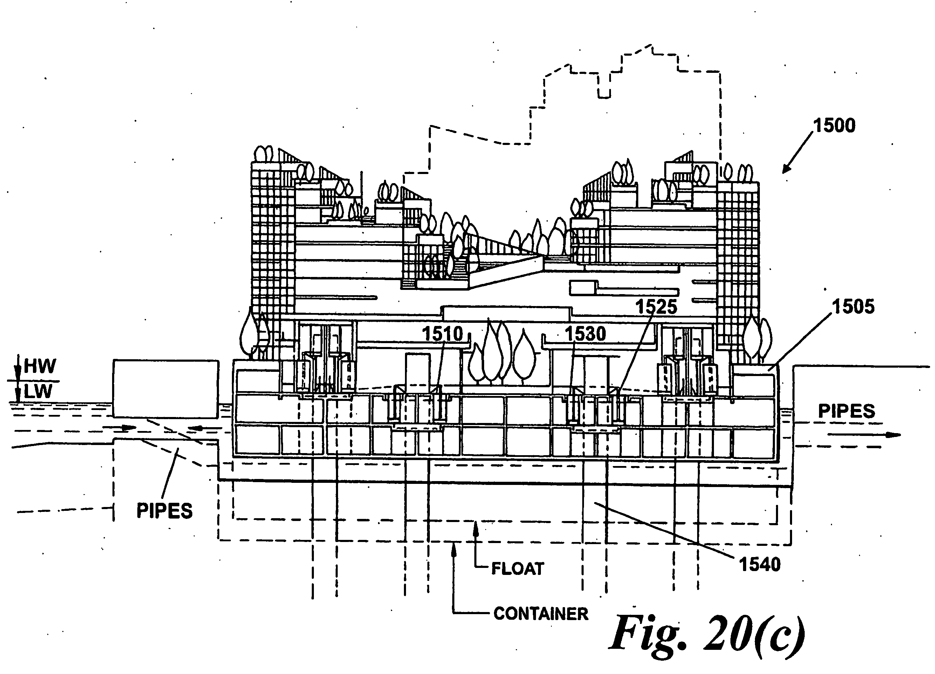

Referring to Figures 20(a) to (d) there is shown an building structure or apparatus, generally designated 1500, according to the present invention. Parts of the building structure 1500 are similar to parts of the floating structure 100, like parts being designated by like numerals, but increased by 1400.

As can be seen the building structure 1500 is provided in a basin 1591 or so-called "bathtub" adjacent a tidal estuary or tidal river 1592.

Water flows from the estuary or river 1592 through pipes 1594 in embankment 1593 into basin 1591. It will be appreciated that a plurality of interconnected basins may be provided, each basin having a building structure 1500. By such arrangement a "Venice" like arrangement of waterways may be provided.

The structure 1500 provides buoyant /floating member 1505 and pump means 1510 and means for generating electricity and purified/desalinated water. Posts 1540 extend from bed rock through the buoyant member such that the buoyant member 1505 may rise and fall with the water level. Supported above the posts 1540 is real estate 1570,1575, as herein before described.

The Inventor presently believes that particularly suitable sites for this form of embodiment would be the River Thames, London, e.g. Kew Gardens, and Manhattan, New York, e.g. the World Trade Centre site.

The sustainability of a structure 100-1500 according to the invention comprising a basic multi-activity 3D city module (village) located in the following locations will now be described:
1. Tidal estuary- Thames Estuary off Southend on Sea;
2. On or beside a river- Teddington Lock River Thames;
3. Inland of tidal source.

### 1. Tidal Estuary-Thames Estuary off Southend on Sea

The average Tidal Range is 12.5 feet. Tidal pumps according to the invention supply high pressure fluid for electrical energy generation and or H₂O.

Utilising energy target 83.6 kWh/m²/yr by Ove Arup at Jubilee Campus, University of Nottingham.

Size 45,000m² and range of activities not dissimilar in environmental requirements to those within the module. Tidal pumps - electricity generated 90% efficient

| | | |
|---|---|---|
| 1,211,215 kWh/year | --------------------------------------------------------------------------------------------------------------------------------------------- | 1 |
| Electricity need | 17.6 kWh/m²/year------------------------------------------------------------------------------------------------------------------- | 2 |
| Gas heating and hot water | 66.0 kWh/m²/year | |

To eliminate use of gas, seawater-source heat pump used per STATOIL Research Centre in Trondheim. Heated floor Area 28,000 m². Coefficient of performance (COP) 4.0.

Therefore 25% x 66.0 kWh/m²/year energy required to obtain 66kWh/m²/yr

| | | |
|---|---|---|
| Energy input to heat pump | 16.5 kWh/m²/year----------------------------------------------- | 3 |
| Total energy required/m² (2+3) 34.1 kWh/m²/year to achieve 83.6kWm²/year | | |
| Total area of floor area | 35,520 m² | |
| Residential | 58.34% | 20,722 m² |
| Commercial/institutional | 35.20% | 12,503 m² |
| Industrial | 4.01% | 1,424 m² |

### Residential population per module:

At 30 m²/person 690 persons 54,495/K² 2.01 x Manhattan NY At 58.34 m²/person USA 355 persons 28, 000/K² 1.03 x Manhattan NY:

To increase the above output, floor areas and residential densities, increasing the load and depth of the float by 50% would increase the energy output and water supply by 50%. The total floor area would be increased by 50% to a total of 53280m².

At 30 m²/person 1,036 persons 81,735/K² 3.00 x Manhattan NY.

At 58.34 m²/person USA 532 persons 42,034/K² 1.55 x Manhattan NY.

In locations with a lower tidal range, say 6.25 feet 50% less than Southend on Sea the energy output, water supply and residential density would be less by 50% unless above option of increasing load and depth applied.

Installing 140 solar arrays of 10 m² on the terraces as half the area of the greenhouses and on the roofs of the topmost accommodation 210,980kWh additional power would be added to all situations.

### 2. Teddington Lock - River Thames, London

The average fall of the non-tidal River Thames from Lechlade (the practical limit of navigation) to Teddington is 0.34m/kilometre over a distance of 200 kilometres. Downstream of the weir and locks at Teddington the sluices at Richmond lock maintain a depth between high and half tide. The average freshwater flow over Teddington weir is 5.2 million m³ but varies greatly throughout the year. The maximum fall is 2.69m.

Figures 19(a) to (c) illustrate the potential for any of the major rivers in the world. As in the diagrams illustrating the pumps functioning in a man-made "tidal range" created by turning on and off the flow of tap water, a lock does the same to raise and lower floating vessels. The Figures illustrate the infrastructure to achieve the potential energy capable of being generated as below by a single module located in a situation similar to Teddington.

| | |
|---|---|
| "Tidal Range" | 8.66 feet |
| Electrical power generated at 90% efficiency | |
| During a Tidal Day Equivalent | 2496 kWh/day |
| During a Tidal Year Equivalent | 911,106 kWh/year |
| Volume of incoming water required | |
| to raise the module to maximum height | |
| within the container/basin in which it floats | 37,000 m³ |
| Volume of water required to be released to | |
| lower the module | 37,000 m³ |
| Average flow rate | 60 m³/sec |
| Time taken to fill container | 10.2 minutes |
| Time taken to empty container | 10.2 minutes |
| Time taken to fill and empty | 20.4 minutes |

Number of rise and falls of the module per day 70
The pumps in a tidal situation each rise or fall twice per day, therefore effective tidal days/day 35 Tidal Days Equivalent

| | |
|---|---|
| Power generated per year | 31,888,710 kWh/year. |

Doubling the load and depth of float as previously described would double the output.

The sump in the container would always be full and the same volume incoming and outgoing in the same time cycle would be required. 63,777,420 kWh/year. Power generated per year if 50% energy used as 63,777,420 kWh/year

| | |
|---|---|
| Input to heat pump COP 4.0 | 159,443,550 kWh/year |

### 3. Inland of Tidal Source

Figures 20(a) to (d) illustrate a module located ashore and at a distance from an existing embankment. The site could be an existing building plot, and the container or basin would be constructed conventionally within the site out to the limit of the site and retaining the adjoining roads and services infrastructure. In turn, the apparatus or module of the invention could be constructed within the container or basin prior to allowing the tidal water to fill, the designed space surrounding and below the apparatus enabling the ebb and flow of the tidal water to penetrate the pumps. The number of apparatus or modules to this design would be limited only by the availability of vacant city blocks. Alternatively, for example, on the Greenwich Peninsula a new city infrastructure of self-sufficient in water and energy could be created.

This arrangement would increase the area of flood plane up river and minimise the threat of flooding anticipated as a result of global warming.

It will be appreciated that the building structure 1500, or indeed any embodiment, may be placed in or on a flood plane or other location liable to flooding. In such use the pump means and related parts may be removed. In such use, the structure is, therefore, capable of protecting persons and/or property against flooding, the buoyant member rising on the posts as and when flood waters arise. Therefore, in such use, when there is no flooding the buoyant member can rest on the ground or be supported by the posts by suitable support means.

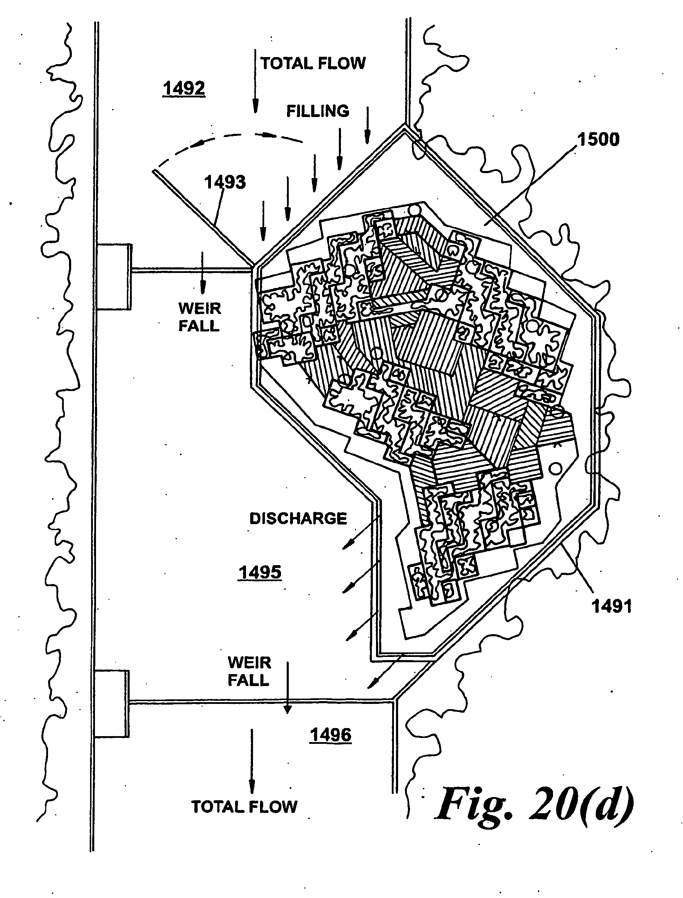

Referring now to Figure 20 (d) there is shown a plan view of a first proposed possible river location for a structure 1500.

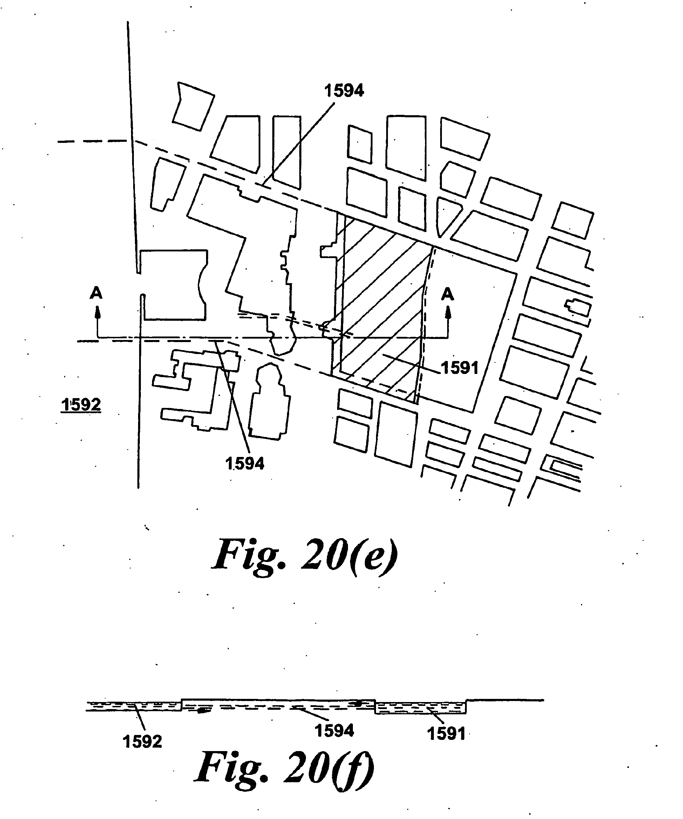

Referring now to Figures 20(e) and (f) there are shown views of a second proposed tidal location for the structure 1500.

This location is that of the World Trade Centre, Manhattan.

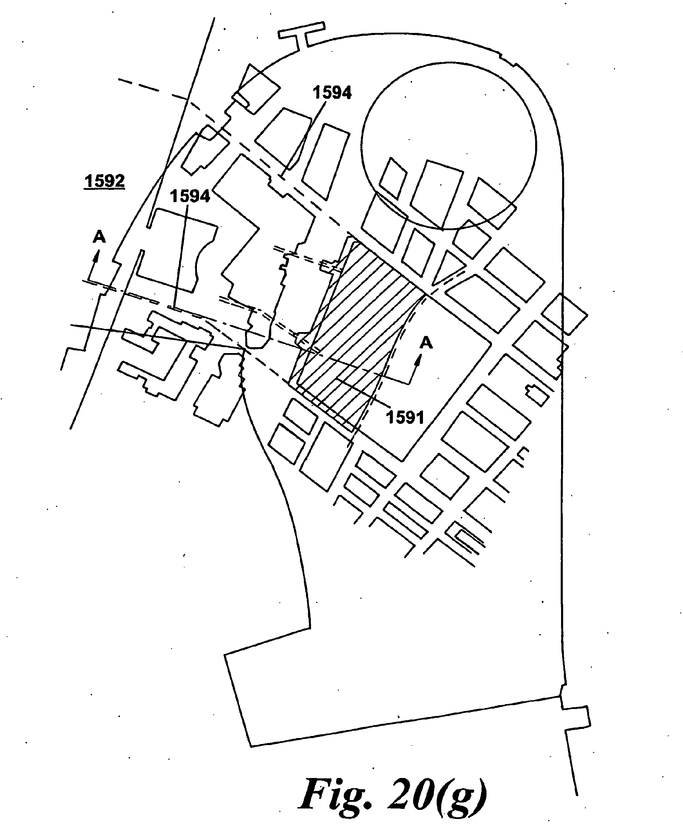

Referring now to Figure 20 (g) there is shown a plan view of a third proposed possible tidal river location for the structure 1500.

This location is that of Greenwich, London at the Millennium Dome.

The structures/floating structures of any of the embodiments disclosed herein can be used as a pump comprising the buoyant member and pump means, wherein, in use, the pump means is driven by rise and/or fall of the buoyant member, with rise and/or fall of a level of fluid such as the tide.

The embodiments of the floating structures disclosed herein can, in use, provide a method of water purification, RO desalination, or power generation, as the pressurised purified water and/or high pressure brine, can be used to drive electrical generator means. It will be appreciated that if RO desalination is not required, then RO desalination means can be omitted, and pressurised sea water from the chambers can be directly fed from an outlet of the chambers to electrical generator means, such as turbines or the like.

In any of the disclosed embodiments the buoyant member or float can be fixed at a high water position by closing inlet and outlet valves in the cylinders mentioned in previous embodiments. The buoyant member or float, together with any superstructure thereupon, will then remain at that level and be supported by the columns of water in the cylinders filled during the pumping sequence.

To reduce the risk of an exceptional wave tending to raise the buoyant member or float above this high fixed level flooding of ballast chambers will reduce the buoyancy of the buoyant member. The buoyancy can be restored by drawing the chambers at low water.

It will be appreciated that the embodiments of the invention hereinbefore described are given by way of example only, and are not meant to limit the scope of the invention in any way.

The Inventor envisages embodiments of the invention being usable anywhere with sufficient fluid level variation or tidal extent, e.g. Jersey, Port of Los Angeles, or Long Beach harbour, to name but a few. Other possible location are Glasgow UK, London UK, the Channel Islands UK, St Malo France, Monaco, New York US, Los Angeles US, the Gulf Coast US, Tokyo Japan, Hong Kong Singapore, Shanghai China, Paradip India, Hatia Bor Bangladesh, the Middle East e.g. Dubai, Sydney Australia, and other parts of these and other countries. Various river locations are also envisaged, e.g. River Tay, UK, and River Tummel, UK, or beneficially any other river, e.g. having existing hydroelectric infrastructure.

It will also be appreciated that if predicted water levels rise, the posts may be extended upwards to accommodate such.

The real estate of any of the embodiments may include water features such as ponds, pools, fountains, and/or water falls, which may be supplied from grey water from the domestic, institutional, educational, commercial, industrial spaces or units.

It will be appreciated that the synergistic combination of electricity generation and/or fresh water generation and building space provided by the present invention is both environmentally and commercially advantageous, providing a renewable energy source/water source and valuable building space.

## Claims

1. An electrical power generator apparatus (100 - 1500), the apparatus comprising at least one buoyant member (105 - 1505) and at least one pump means (110 - 1510), wherein, in use the at least one pump means is driven by rise and/or fall of the buoyant member with rise and/or fall of the level of a fluid, such as a body of water, wherein
the apparatus comprises a structure of which the buoyant member comprises part, the structure also comprising at least one post (340 - 1540) fixed to ground/sea bed/river bed below the buoyant member;
wherein the/each post extends substantially vertically through a or a respective aperture (350 -1550) in the buoyant member, **characterised in that**
at least one guide means (341) is provided between the/each post and a circumferential portion of the respective aperture, wherein each/the guide means comprises a rolling damper.

2. An apparatus as claimed in claim 1, wherein: the surface on or above the buoyant member can be used as
real estate, real property, or building development site, such as domestic space(s), and/or educational/institutional space(s), and/or commercial/industrial space(s), and/or wherein
the apparatus comprises one or more enclosed spaces (570 - 1570) and/or open spaces and/or building(s) selected from one or more of domestic space(s), educational/institutional space(s), commercial/industrial space(s), and/or gardens and/or public spaces, and/or paths/walkways/waterways/roadways.

3. An apparatus as claimed in either of claims 1 or 2, wherein the apparatus comprises electrical power generation means and water purification/desalination means which are, in use, driven by the at least one pump means.

4. An apparatus as claimed in any of claims 1 to 3, wherein the apparatus is to be provided in a marine environment such as adjacent land or offshore, and the rise and fall of the level of fluid is the rise and fall of the tide.

5. An apparatus as claimed in any of claims 1 to 3, wherein the apparatus is to be provided in a river such as at, adjacent, or in a weir or lock.

6. An apparatus as claimed in any of claims 1 to 5, wherein the apparatus is to be provided in a basin such as a basin adjacent to and communicatable with a body of water such as a tidal estuary, river, sea or ocean.

7. An apparatus as claimed in any of claims 1 to 6, wherein:
the buoyant member comprises at least one chamber (346;630), and wherein
there are provided means for varying the buoyancy of the buoyant member which comprise means for flooding and/or draining the each or at least one chamber, and wherein optionally
the buoyant member comprises a plurality of chambers which are provided in an array or honeycomb-like arrangement.

8. An apparatus as claimed in any of claims 1 to 7, wherein:
the buoyant member is made at least partly from a pre-stressed concrete, reinforced concrete, or precast reinforced concrete, and/or wherein:
the buoyant member has a weight selected from: between 1,500,000 kg and 60,000,000 kg, between around 1,760,205 kg and 52,806,150 kg, or around 1,760,205 kg or 52, 806, 150 kg, and/or
the buoyant member has an internal volume selected from: between 2,500m³ and 100,000m³, between around 2,956m³ and 88,690m³, or around 2,956m³ or 88,690m³, and/or
the buoyant member has a length selected from: between 20m and 150m, between around 27m and 135m, or 27m or 135m, a breadth selected from: between 20m and 100m, between around 27m and 81m, or around 27m or 81m, and a height selected from: between 1m and 20m, between around 5m and 10m, or around 5m or 10m.

9. An apparatus as claimed in any of claims 1 to 8, wherein:
the pump means comprises at least one piston (355 - 1555) and piston chamber or cylinder (330 - 1530), which piston chamber fills and empties or empties and fills with a further/the fluid upon rise and/or fall of the tide, wherein optionally
one of the piston and piston chamber is fixed on or relative to the buoyant member and the other of the piston and piston chamber is fixed relative to a fixed position, such as the seabed or the land, or to the bottom of a body of water, such as a seabed, river or river estuary, optionally wherein
the other of the piston and piston chamber is fixed relative to the bottom of the body of water by means of at least one post, and wherein optionally
the/each pump means comprises at least one pair of pistons and piston chambers arranged such that, in use, the pair operates out of synchronisation with one another.

10. An apparatus as claimed in claim 9, wherein
the piston comprises a piston rod (327), one end of the piston rod being attached to the piston member by a universal joint or knuckle (328a), another end of the piston rod being attached to either the buoyant member or to a gantry on the post by another universal joint or knuckle (328b), provision of such allowing for lateral play between the buoyant member and post, and/or wherein
the cylinder(s) is/are moveably and fixably mounted on the post such as by means of a slidable lockable cradle or bushing (32a).

11. An apparatus as claimed in any of claims 1 to 6, wherein,
each/the rolling damper comprising a roller member such as a rubber and/or pneumatic tyre and shock absorbing member.

12. An apparatus as claimed in any of claims 1 to 11, wherein:
there are provided a plurality of pump means, such as at least three pump means, symmetrically disposed in relation to one another, and/or wherein
each pump means comprises or is provided with an associated post, the posts being symmetrically disposed relative to one another.

13. An apparatus as claimed in claim 9 or any of claims 10 to 12 when dependent upon claim 9, wherein:
there is provided means for delivering fluid/seawater/river water to the cylinder, such as an inlet fluid line (781), and/or
there is provided means for exhausting fluid/seawater/river water from the cylinder, such as an outlet fluid line (782), and optionally
there are provided valve means (780a, 780b) for opening the inlet fluid line and closing the outlet fluid line during fluid delivery, and for closing the inlet fluid line and opening the outlet fluid line during fluid exhaust.

14. An apparatus as claimed in claim 6 or any of claims 9 to 13 when dependent upon claim 6, wherein where the/each post extends substantially vertically through a or a respective aperture in the buoyant member there is provided means for fixing or locking the buoyant member relative to the post(s).

## Patentansprüche

1. Elektrische Stromerzeugungsvorrichtung (100-1500), wobei die Vorrichtung mindestens ein Schwimmelement (105-1505) und mindestens eine Pumpeneinrichtung (110-1510) aufweist, wobei bei Benutzung die mindestens eine Pumpeneinrichtung durch ein Ansteigen und/oder Absinken des Schwimmelementes mit dem Ansteigen und/oder Absinken eines Flüssigkeitspegels, wie beispielsweise eines Gewässers, angetrieben wird, wobei
die Vorrichtung eine Struktur aufweist, von der das Schwimmelement ein Teil ist, wobei die Struktur ebenfalls mindestens einen Pfosten (340-1540) aufweist, der am Erdboden/Meeresgrund/Flussbett unterhalb des Schwimmelementes befestigt ist;
wobei sich der/jeder Pfosten im Wesentlichen vertikal durch eine oder eine jeweilige Öffnung (350-1550) im Schwimmelement erstreckt, **dadurch gekennzeichnet, dass**
mindestens eine Führungseinrichtung (341) zwischen dem/jedem Pfosten und einem peripheren Abschnitt der jeweiligen Öffnung bereitgestellt wird, wobei jede/die Führungseimichtung einen Rolldämpfer aufweist.

2. Vorrichtung nach Anspruch 1, bei der:
die Fläche auf oder über dem Schwimmelement als Grundstück, Grundbesitz oder Bauerschließungsstandort genutzt werden kann, wie beispielsweise Wohnraum (Wohnräume) und/oder Ausbildungs-/Institutionsräume und/oder kommerzielle/industrielle Räume, und/oder wobei
die Vorrichtung einen oder mehrere geschlossene Räume (570-1570) und/oder Freiflächen und/oder Gebäude aufweist, ausgewählt unter einem oder mehreren der Wohnraum (wohnräume), Ausbildungs-/Institutionsräume, kommerziellen/industriellen Räume und/oder Gärten und/oder öffentlichen Flächen und/oder Wegen/Fußwegen/Wasserwegen/Fahrbahnen.

3. Vorrichtung nach entweder Anspruch 1 oder 2, bei der die Vorrichtung eine Erzeugungseinrichtung für elektrischen Strom und Wasserreinigungs/Entsalzungseinrichtung aufweist, die bei Benutzung durch die mindestens eine Pumpeneinrichtung angetrieben werden.

4. Vorrichtung nach einem der Ansprüche 1 bis 3, bei der die Vorrichtung in einer Meeresumgebung bereitgestellt werden soll, wie beispielsweise dem angrenzenden Land oder auf See, und bei der das Ansteigen und Absinken des Flüssigkeitspegels das Ansteigen und Absinken der Gezeiten ist.

5. Vorrichtung nach einem der Ansprüche 1 bis 3, bei der die Vorrichtung in einem Fluss bereitgestellt werden soll, wie beispielsweise an einer/einem, angrenzend an eine/einen oder in einer/einem Damm oder einer Schleuse.

6. Vorrichtung nach einem der Ansprüche 1 bis 5, bei der die Vorrichtung in einem Becken bereitgestellt werden soll, wie beispielsweise einem Becken, das an ein Gewässer angrenzt und damit in Verbindung gebracht werden kann, wie beispielsweise einem Gezeitenästuar, einem Fluss, der See oder dem Ozean.

7. Vorrichtung nach einem der Ansprüche 1 bis 6, bei der:
das Schwimmelement mindestens eine Kammer (346; 630) aufweist, und bei der
eine Einrichtung für das Verändern der Schwimmfähigkeit des Schwimmelementes bereitgestellt wird, die eine Einrichtung für das Fluten und/oder Entleeren einer jeden oder mindestens einer Kammer aufweist, und bei der wahlweise
das Schwimmelement eine Vielzahl von Kammern aufweist, die in einer Anordnung oder wabenartigen Anordnung bereitgestellt werden.

8. Vorrichtung nach einem der Ansprüche 1 bis 7, bei der:
das Schwimmelement mindestens teilweise aus Spannbeton, Stahlbeton oder einem Stahlbetonfertigteil besteht und/oder bei der:
das Schwimmelement ein Gewicht aufweist, das ausgewählt wird unter: zwischen 1.500.000 kg und 60.000.000 kg, zwischen etwa 1.760.205 kg und 52.806.150 kg oder etwa 1.760.205 kg oder 52.806.150 kg; und/oder
das Schwimmelement ein Innenvolumen aufweist, das ausgewählt wird unter: zwischen 2.500 m³ und 100.000 m³, zwischen etwa 2.956 m³ und 88.690 m³ oder etwa 2.956 m³ oder 88.690 m³; und/oder
das Schwimmelement aufweist: eine Länge, die ausgewählt wird unter: zwischen 20 m und 150 m, zwischen etwa 27 m und 135 m oder 27 m oder 135 m; eine Breite, die ausgewählt wird unter: zwischen 20 m und 100 m, zwischen etwa 27 m und 81 m oder etwa 27 m oder 81 m; und eine Höhe, die ausgewählt wird unter: zwischen 1 m und 20 m, zwischen etwa 5 m und 10 m oder etwa 5 m oder 10 m.

9. Vorrichtung nach einem der Ansprüche 1 bis 8, bei der:
die Pumpeneinrichtung mindestens einen Kolben (355-1555) und eine Kolbenkammer oder Zylinder (330-1530) aufweist, wobei sich die Kolbenkammer mit einer weiteren/der Flüssigkeit beim Ansteigen und/oder Absinken der Gezeiten füllt und entleert oder entleert und füllt, wobei wahlweise
einer von Kolben und Kolbenkammer am oder relativ zum Schwimmelement befestigt wird, und wobei der andere von Kolben und Kolbenkammer relativ zu einer stationären Position befestigt wird, wie beispielsweise dem Meeresgrund oder dem Land, oder am Boden eines Gewässers, wie beispielsweise einem Meeresgrund, Fluss oder einer Flussmündung, wobei wahlweise
der andere von Kolben und Kolbenkammer relativ zum Boden des Gewässers mittels mindestens eines Pfostens befestigt wird, und wobei wahlweise
die/jede Pumpeneinrichtung mindestens ein Paar Kolben und Kolbenkammern aufweist, die so angeordnet sind, dass das Paar bei Benutzung nicht synchron miteinander funktioniert.

10. Vorrichtung nach Anspruch 9, bei der:
der Kolben eine Kolbenstange (327) aufweist, wobei ein Ende der Kolbenstange am Kolbenelement mittels eines Universalgelenkes oder Scharniergelenkes (328a) befestigt ist, wobei ein weiteres Ende der Kolbenstange entweder am Schwimmelement oder Gerüst am Pfosten mittels eines weiteren Universalgelenkes oder Scharniergelenkes (328b) befestigt ist, wobei deren Bereitstellung ein seitliches Spiel zwischen dem Schwimmelement und dem Pfosten gestattet, und/oder bei der
der (die) Zylinder beweglich ist/sind und stationär am Pfosten montiert ist/sind, wie beispielsweise mittels einer verschiebbaren, verriegelbaren Wiege oder Führung (32a).

11. Vorrichtung nach einem der Ansprüche 1 bis 6, bei der:
jeder/der Rolldämpfer ein Rollenelement aufweist, wie beispielsweise einen Gummi- und/oder Luftreifen und ein Stoßdämpferelement.

12. Vorrichtung nach einem der Ansprüche 1 bis 11, bei der:
eine Vielzahl von Pumpeneinrichtungen bereitgestellt wird, wie beispielsweise mindestens drei Pumpeneinrichtungen, die symmetrisch in Beziehung zueinander angeordnet sind, und/oder bei der
eine jede Pumpeneinrichtung einen dazugehörenden Pfosten aufweist oder damit versehen ist, wobei die Pfosten symmetrisch relativ zueinander angeordnet sind.

13. Vorrichtung nach Anspruch 9 oder einem der Ansprüche 10 bis 12, wenn sie vom Anspruch 9 abhängig sind, bei der:
eine Einrichtung für das Liefern von Flüssigkeit/Meereswasser/Flusswasser zum Zylinder bereitgestellt wird, wie beispielsweise eine Eintrittsflüssigkeitsleitung (781), und/oder
eine Einrichtung für das Entleeren von Flüssigkeit/Meereswasser/Flusswasser aus dem Zylinder bereitgestellt wird, wie beispielsweise eine Austrittsflüssigkeitsleitung (782), und wahlweise
eine Ventileinrichtung (780a, 780b) für das Öffnen der Eintrittsflüssigkeitsleitung und das Schließen der Austrittsflüssigkeitsleitung während der Lieferung der Flüssigkeit und für das Schließen der Eintrittsflüssigkeitsleitung und das Öffnen der Austrittsflüssigkeitsleitung während des Entleerens der Flüssigkeit bereitgestellt wird.

14. Vorrichtung nach Anspruch 6 oder einem der Ansprüche 9 bis 13, wenn sie vom Anspruch 6 abhängig sind, bei der dort, wo sich der/jeder Pfosten im Wesentlichen vertikal durch eine oder eine jeweilige Öffnung im Schwimmelement erstreckt, eine Einrichtung für das Befestigen oder Verriegeln des Schwimmelementes relativ zum (zu den) Pfosten bereitgestellt wird.

## Revendications

1. Appareil générateur d'énergie électrique (100-1500), l'appareil comprenant au moins un élément flottant (105-1505) et au moins un moyen de pompe (110-1510), dans lequel, en service, le au moins un moyen de pompe est entraîné par la montée et/ou la descente de l'élément flottant par suite de la montée et/ou de la descente du niveau d'un fluide, par exemple d'un plan d'eau ; dans lequel
l'appareil comprend une structure dont l'élément flottant fait partie, la structure comprenant également au moins un poteau (340-1540) fixé sur le sol/le fond marin/le lit fluvial au-dessous de l'élément flottant ;
le/chaque poteau s'étendant de manière essentiellement verticale à travers une ouverture ou une ouverture respective (350-1550) dans l'élément flottant, **caractérisé en ce que**
au moins un moyen de guidage (341) est agencé entre le/chaque poteau et une partie circonférentielle de l'ouverture respective, chaque/le moyen de guidage comprenant un amortisseur de roulement.

2. Appareil selon la revendication 1, dans lequel la surface sur ou au-dessus de l'élément flottant peut être utilisée comme :
propriété foncière, bien immobilier, ou site de développement immobilier, par exemple d'un espace (d'espaces) domestique(s), et/ou d'un espace (d'espaces) éducationnel(s)/institutionnel(s), et /ou d'un espace (d'espaces) commercial (commerciaux)/industriel(s), et/ou dans lequel
l'appareil comprend un ou plusieurs espaces renfermés (570-1570) et/ou espaces ouverts et/ou immeuble(s) sélectionnés parmi un ou plusieurs éléments comprenant un espace (des espaces) domestique(s), un espace (des espaces) éducationnel(s)/institutionnel(s), un espace (des espaces) commercial (commerciaux)/industriel (s), et/ou des jardins et/ou des espaces publics, et/ou des chemins/ des allées/des voies navigables/des chaussées.

3. Appareil selon les revendications 1 ou 2, dans lequel l'appareil comprend un moyen générateur d'énergie électrique et un moyen de purification d'eau/de désalinisation, entraînés en service par le au moins un moyen de pompe.

4. Appareil selon l'une quelconque des revendications 1 à 3, dans lequel l'appareil doit être mis en place dans un environnement marin, par exemple la terre adjacente ou en mer, la montée et la descente du niveau de fluide correspondant à la montée et à la descente de la marée.

5. Appareil selon l'une quelconque des revendications 1 à 3, dans lequel l'appareil doit être mis en place dans un fleuve, par exemple au niveau ou près d'un barrage ou d'une écluse ou dans ceux-ci.

6. Appareil selon l'une quelconque des revendications 1 à 5, dans lequel l'appareil doit être mis en place dans un bassin, par exemple un bassin adjacent à un plan d'eau et pouvant communiquer avec celui-ci, par exemple un estuaire à marée, un fleuve, la mer ou l'océan.

7. Appareil selon l'une quelconque des revendications 1 à 6, dans lequel :
l'élément flottant comprend au moins une chambre (346 ; 630), et dans lequel
est mis en place un moyen pour changer la flottabilité de l'élément flottant, comprenant un moyen pour remplir/et ou évacuer chaque ou au moins une chambre, et dans lequel
l'élément flottant comprend optionnellement plusieurs chambres mises en place dans une matrice ou un agencement en nid d'abeilles.

8. Appareil selon l'une quelconque des revendications 1 à 7, dans lequel :
l'élément flottant est fabriqué au moins en partie à partir de béton précontraint, de béton armé, ou de béton armé préfabriqué, et/ou dans lequel :
l'élément flottant a un poids sélectionné parmi les poids ci-dessous : entre 1.500.000 kg et 60.000.000 kg, entre environ 1.760.205 kg et 52.806.150 kg, ou environ 1.760.205 kg ou 52.806.150 kg, et/ou
l'élément flottant a un volume interne sélectionné parmi les volumes ci-dessous : entre 2.500 m³ et 100.000 m³, entre environ 2.926 m³ et 88.690 m³, ou environ 2.956 m³ ou 88.690 m³, et/ou
l'élément flottant a une longueur sélectionnée parmi les longueurs ci-dessous : entre 20 m et 150 m, entre environ 27 m et 135 m, ou 27 m ou 135 m, une largeur sélectionnée parmi les largeurs ci-dessous : entre 20 m et 100 m, entre environ 27 m et 81 m, ou environ 27 m ou 81 m, et une hauteur sélectionnée parmi les hauteurs ci-dessous : entre 1 m et 20 m, entre environ 5 m et 10 m, ou environ 5 m ou 10 m.

9. Appareil selon l'une quelconque des revendications 1 à 8, dans lequel :
le moyen de pompe comprend au moins un piston (355-1555) et une chambre de piston ou un cylindre (330-1530), cette chambre du piston étant remplie et vidée ou vidée et remplie avec un fluide additionnel/le fluide lors de la montée et/ou de la descente de la marée ; dans lequel
un élément, le piston ou la chambre de piston, est optionnellement fixé sur l'élément flottant ou par rapport à celui-ci, l'autre élément, le piston ou la chambre de piston, étant fixé par rapport à une position fixe, par exemple le fond marin ou la terre, ou sur le fond d'un plan d'eau, par exemple un fond marin, un fleuve ou l'estuaire d'un fleuve, dans lequel
l'autre élément, le piston ou la chambre de piston, est optionnellement fixé sur le fond du plan d'eau par l'intermédiaire d'au moins un poteau, et dans lequel
le/chaque moyen de pompe comprend optionnellement au moins une paire de pistons et de chambres de piston, agencée de sorte qu'en service la paire fonctionne de manière non synchronisée.

10. Appareil selon la revendication 9, dans lequel
le piston comprend une tige de piston (327), une extrémité de la tige de piston étant fixée sur l'élément de piston par l'intermédiaire d'un joint universel ou d'un joint articulé (328a), une autre extrémité de la tige de piston étant fixée sur l'élément flottant ou sur un portique sur le poteau par un autre joint universel ou un joint articulé (328b), permettant ainsi un jeu latéral entre l'élément flottant et le poteau, et/ou dans lequel
le(s) cylindre(s) est/sont monté(s) de manière mobile et fixable sur le poteau, par exemple par l'intermédiaire d'un berceau coulissant à verrouillage ou d'une douille (32a).

11. Appareil selon l'une quelconque des revendications 1 à 6, dans lequel
chaque amortisseur/l'amortisseur de roulement comprend un élément de roulement, par exemple un pneu en caoutchouc et/ou à air et un élément amortisseur de chocs.

12. Appareil selon l'une quelconque des revendications 1 à 11, dans lequel :
l'appareil comporte plusieurs moyens de pompe, par exemple au moins trois moyens de pompe, agencés de manière mutuellement symétrique, et/ou dans lequel
chaque moyen de pompe comprend ou est équipé d'un poteau associé, les poteaux étant agencés de manière mutuellement symétrique.

13. Appareil selon la revendication 9, ou selon l'une quelconque des revendications 10 à 12, dépendant de la revendication 9, dans lequel
l'appareil comporte un moyen pour amener un fluide/de l'eau de mer/de l'eau d'un fleuve vers le cylindre, par exemple une conduite d'entrée du fluide (781), et/ou
l'appareil comporte un moyen pour évacuer le fluide/l'eau de mer/l'eau du fleuve du cylindre, par exemple un conduite de sortie du fluide (782), et dans lequel
l'appareil comporte optionnellement un moyen de soupape (780a, 780b) pour ouvrir la conduite d'entrée du fluide et pour fermer la conduite de sortie du fluide au cours de la distribution du fluide, et pour fermer la conduite d'entrée du fluide et ouvrir la conduite de sortie du fluide au cours de l'évacuation du fluide.

14. Appareil selon la revendication 6 ou selon l'une quelconque des revendications 9 à 13, dépendant de la revendication 6, dans lequel là, où le/chaque poteau s'étend de manière essentiellement verticale à travers une ouverture ou une ouverture respective dans l'élément flottant, un moyen est prévu pour fixer ou verrouiller l'élément flottant par rapport au(x) poteau(x).
